(19) Europäisches Patentamt
European Patent Office
Office européen des brevets

(11) **EP 2 745 485 B1**

(12) **EUROPEAN PATENT SPECIFICATION**

(45) Date of publication and mention
of the grant of the patent:
**24.10.2018  Bulletin 2018/43**

(51) Int Cl.:
*H04L 29/06* *(2006.01)*      *H04L 12/26* *(2006.01)*
*H04L 12/70* *(2013.01)*

(21) Application number: **11751579.1**

(22) Date of filing: **17.08.2011**

(86) International application number:
**PCT/EP2011/064143**

(87) International publication number:
**WO 2013/023690 (21.02.2013 Gazette 2013/08)**

(54) **ADVANCED DETERMINATION, PROCESSING AND CONTROL IN COMMUNICATION NETWORKS**

FORTGESCHRITTENE DEFINITION, VERARBEITUNG UND STEUERUNG IN KOMMUNIKATIONSNETZEN

PROCÉDÉS DE DÉTERMINATION, DE TRAITEMENT ET DE CONTRÔLE AVANCÉS DANS DES RÉSEAUX DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.06.2014  Bulletin 2014/26**

(73) Proprietor: **Telefonaktiebolaget LM Ericsson (publ)**
**164 83 Stockholm (SE)**

(72) Inventor: **GOCHI GARCIA, Ibon**
**E-48992 Algorta (Vizcaya) (ES)**

(74) Representative: **Ericsson**
**Patent Development**
**Torshamnsgatan 21-23**
**164 80 Stockholm (SE)**

(56) References cited:
**EP-A1- 2 045 974      US-A1- 2009 300 153**

- **LI ERRAN LI ET AL: "Detecting Subscribers Using NAT Devices in Wireless Data Networks", BELL LABS TECHNICAL JOURNAL, WILEY, CA, US, vol. 14, no. 2, 1 July 2009 (2009-07-01), pages 224-233, XP001546645, ISSN: 1089-7089, DOI: 10.1002/BLTJ.20381**
- **Admin: "Http header User-Agent for detecting browser type including mobile browsers", The Web Goodies, 19 October 2010 (2010-10-19), pages 1-3, XP55025111, Retrieved from the Internet: URL:http://www.thewebgoodies.com/2010/10/19/http-header-user-agent-for-detecting-browser-type-including-mobile-browsers/ [retrieved on 2012-04-19]**

## Description

### [Technical field]

The present invention relates to methods carried out in a communication network such as, for example, a packet core network. The invention also relates to network nodes and sets of network nodes configured for carrying out such methods, and to computer programs comprising instructions configured, when executed on a network node, to cause the network node to carry out such methods. The invention may notably be used in communication networks to dynamically adapt the processing of data packets to network traffic properties so as to efficiently use the network resources.

### [Background]

In communication networks, such as telecommunication networks, the provision of a call or service often involves, on the one hand, a control plane or signalling plane and, on the other hand, a user plane or media plane. The control plane or signalling plane is in charge of establishing and managing a connection between two points on the network. The user plane or media plane is in charge of transporting the user data.

In this context, network operators often want to define and enforce a set of rules in the network. A set of rules constitutes policies. A policy framework for managing and enforcing these policies usually includes at least three elements, or functions: a policy repository for storing the policy rules, which may be user-specific (subscriber-specific), a policy decision element, function or point, and a policy enforcement element, function or point. The purposes of a policy framework include controlling subscriber access to the networks and services.

A policy framework notably addresses the decisions as to whether the subscriber is entitled, or authorized, to enjoy a service, and whether the network can provide the service to the subscriber, and with which quality of service (QoS).

Policy and charging control architectures, such as, but not limited to, the architecture described in 3GPP TS 23.203 V11.0.1 (2011-01), Technical Specification Group Services and System Aspects; "Policy and charging control architecture" (Release 11) (available from http://www.3gpp.org/ftp/Specs/archive/23_series/23.203/23203-b01.zip), integrate the policy and charging control. One aim of a policy framework is to set up and enforce rules to ensure a fair usage of the network resources among the subscribers.

Document XP1546645, "Detecting Subscribers Using NAT Devices in Wireless Data Networks", discloses a method where multiple users that uses a NAT device are detected in order to apply the appropriate charging policy.

It is desirable to provide methods, network nodes and computer programs to improve traffic control in communication networks, notably by allowing operators to set up more flexible control mechanisms in the networks without increasing, or at least without excessively increasing, the implementation and architecture complexity and the associated equipment and maintenance costs.

### [Summary]

To meet or at least partially meet the above-mentioned goals, such methods, network nodes and computer programs are defined in the independent claims. Advantageous embodiments are defined in the dependent claims.

In one embodiment, a method is carried out by at least one network node in a communication network. The method includes a determining procedure. The determining procedure includes determining, from received packets, at least one characteristic of one or more end user devices connected, through an end user communication terminal, to the communication network. To do so, the determining procedure includes inspecting at least one of (i) layer n control information of the received packets, wherein n is an integer equal to or larger than 3; and (ii) the received packets' payload encapsulated by layer 7 control information. The layer level is here understood in the sense of the well-known Open Systems Interconnection (OSI) reference model (but may be translated into other reference models).

The method enables the network node to determine, in the sense of obtaining, detecting or estimating, information about the environment behind an end user communication terminal connected to the communication network. The end user communication terminal acts as a point of entry, connection or access, to the communication network for a particular subscriber, i.e., for an end user or group of end users. The network node is configured to inspect packets beyond their physical and data link layer headers to determine one or more characteristics of the environment behind the end user communication terminal, i.e. one or more characteristics of the end user device(s) connected, through the end user communication terminal, to the communication network. By "the environment behind the end user communication terminal", it is here understood that the end user communication terminal may provide access, for one or more end user devices, to the communication network, so that the one or more end user devices may be regarded as located behind the end user communication terminal from the point of view of a network node located in the communication network.

The determining procedure outputs, produces, or generates technical information representing one or more characteristics of the technical environment, otherwise unknown, behind the end user communication terminal. In other words, the determining procedure, carried out by a network node in the communication network, includes inspecting packets beyond their physical and data link layer headers, and reveals technical information representing one or more characteristics of the technical environment behind the end user communication terminal, wherein this or these characteristics would be otherwise normally unknown from the point of view of the network node. Therefore, the network node may be compared, to a certain extent, to an ultrasound probe used to produce an ultrasound image of the inside of a metal component. The inside of a metal component is the environment which would be otherwise normally unknown without the ultrasound probe. The network node, by inspecting received packets beyond their physical and data link layer headers, probes the otherwise unknown environment located behind the end user communication terminal.

As mentioned above, the method is carried out by at least one network node. The determining procedure included in the method is also carried out by the at least one network node. The determining procedure includes the technical operation of inspecting received packets as described above, i.e. by performing deep packet inspection (DPI).

The end user device(s) connected, through the end user communication terminal, to the communication network are located behind the end user communication terminal and are connected to the end user communication terminal to access the communication network ("to access" including here transferring packets, i.e. both receiving and sending packets). The end user device(s) are located in an environment controlled by the subscriber (the end user or group of end users) rather than by the operator(s) of the communication network. The one or more characteristics of the end user device(s) connected, through the end user communication terminal, to the communication network, may be any type of characteristics. The characteristics may be any characteristics of the end user device(s), provided that the characteristics can be obtained, detected or estimated by performing packet inspection on packets received at the network node(s). The one or more characteristics may be, but is not limited to, the type of the end user device(s) located behind the end user communication terminal or the number of end user devices located behind the end user communication terminal.

The above-referred packet inspection, also referred to here as DPI, may include detecting patterns in packets' headers at the network layer or above layers, or detecting patterns of the application layer's packets' payload. The patterns to be detected may be specific to the type of end user device originating or terminating the packet flow to which the inspected packet belongs.

In one sub-embodiment of the above-described embodiment, the determining procedure includes inspecting at least one of (i) layer n control information of the received packets, wherein n is an integer equal to or larger than 5; and (ii) the received packets' payload encapsulated by layer 7 control information.

In one sub-embodiment of the above-described embodiment, the determining procedure includes inspecting at least one of (i) layer n control information of the received packets, wherein n is an integer equal to or larger than 7; and (ii) the received packets' payload encapsulated by layer 7 control information.

In one embodiment, the method further includes an enforcing procedure including enforcing policy rules, on received packets, depending on the result of the determining procedure. The policy rules may comprise QoS rules.

In this embodiment, packets received by the network node may be processed differently depending on the determined characteristics. For instance, if the network node determines that a received packet belongs to a packet flow originating or terminating at an end user device being a television set (with a high screen resolution), a specific QoS may be applied to the received packets belonging to this packet flow. In contrast, if a packet is determined to belong to a packet flow originating or terminating at an end user device being a smartphone (with a lower screen resolution), another QoS may be applied to the packets of this packet flow. This enables the network node, and therefore the network operator(s) in charge of applying policies in the communication network, to control the processing of packets in a flexible manner and with due consideration to the particulars of the end user devices associated with the processed packet flows, even though the end user devices are, to a certain extent, hidden behind the end user communication terminal (which is the terminal directly interfacing the communication network).

In one embodiment, the at least one characteristic of the one or more end user devices includes whether an end user device is of a particular type. In this embodiment, policy rules may be enforced, and enforcing policy rules may depend on the determined type of the one or more end user devices. This however is one possible characteristic only. As will be discussed below, another characteristic may be the estimated number of end user devices located behind the end user communication terminal.

In one embodiment wherein the at least one characteristic of the one or more end user devices includes whether an end user device is of a particular type, the determining procedure includes: (a) obtaining identification information for identifying packets belonging to a packet flow originating or terminating in an end user device of the particular type (the end user device connecting, through the end user communication terminal, to the communication network); and (b) determining whether a received packet belongs to a packet flow originating or terminating in an end user device of the particular type, by using the identification information and by inspecting at least one of (i) layer n control information of the received packet and (ii) the received packet's payload encapsulated by layer 7 control information; and the enforcing procedure includes: if it is determined that the received packet belongs to a packet flow originating or terminating in an end user device of the particular type, here referred to as determined type, enforcing, on the received packet, policy rules associated with the determined type.

In this embodiment, obtaining identification information for identifying packets belonging to a packet flow originating or terminating in an end user device of a particular type may mean in particular obtaining identification information for enabling the network node to detect whether a received packet belongs to a packet flow originating or terminating in an end user device of the particular type. This may include obtaining, from a database or repository, some rules, such as parsing rules and/or strings of symbols to detect, sufficient to enable the network node to identify patterns in the packets so as to classify them according to the type of the end user device originating or terminating the packet flow to which the packets belong.

In one embodiment, the at least one characteristic of the one or more end user devices includes an estimated number of end user devices connected, through the end user communication terminal, to the communication network.

In this embodiment, the network node may estimate how many end user devices are located behind the end user communication terminal, by inspecting, over a period of time, successive packets belonging to packet flows transiting through the end user communication terminal. In other words, the network node estimates how many end user devices are used by a subscriber, wherein these end user devices communicate, through the end user communication terminal, to the communication network. If a subscriber (end user or group of end users) uses several end user devices of the same type, the network node may not be able to distinguish between packets belonging to a packet flow originating or terminating at a first end user device or at a second end user device of the same type. The network node may nevertheless estimate the number of end user devices based on the identified number of types of end user devices. The estimation may be incorrect in some cases, but, assuming that a subscriber rarely operates more than one end user device of the same type, the estimation may be correct in most cases.

In a sub-embodiment wherein the at least one characteristic of the one or more end user devices includes an estimated number of end user devices connected, through the end user communication terminal, to the communication network, the determining procedure may include: (a) determining whether a received packet belongs to a packet flow originating or terminating in a particular end user device connected, through an end user communication terminal, to the communication network, by inspecting at least one of (i) layer n control information of the received packet and (ii) the received packet's payload encapsulated by layer 7 control information; and (b) repeating the step of determining on subsequently received packets; and the enforcing procedure may include: enforcing, on received packets belonging to a packet flow originating or terminating in an end user device connected, through the end user communication terminal, to the communication network, policy rules depending on the estimated number of end user devices connected, through the same end user communication terminal, to the communication network.

In this embodiment, policy rules are enforced on the received packets by the network node depending on the estimated number of end user devices connected to the communication network through the same end user communication terminal (i.e. for a particular subscriber). For example, the network node may, at one point time, grant a QoS or a bandwidth to a particular subscriber depending on the estimated number of end user devices that the subscriber uses (behind the single end user communication terminal).

In one embodiment, the method further includes a recording procedure including recording the result of the determining procedure. In this embodiment, the at least one characteristic of the one or more end user devices may include, but is not limited to, at least one of: (i) whether an end user device is of a particular type; and (ii) an estimated number of end user devices connected, through the end user communication terminal, to the communication network. Recording the result of the determining procedure, for instance over a period of time, produces information about the technical environment behind the end user communication terminal. This technical information may be used for maintenance purposes, diagnostic purposes, statistical purposes, marketing purposes, or any other purpose.

In one embodiment, the at least one network node includes at least one of: a policy and charging enforcement function (PCEF), and a traffic detection function (TDF).

A PCEF and a TDF are components of a policy and charging control (PCC) architecture. Through such PCC architecture, a network operator manages the rules to be applied to the user sessions, or subscriber sessions, regarding which use of the network is allowed and which charging rule must be applied to a particular session on the user plane. In this embodiment, the network node in charge of the determining procedure may be part of the PCC architecture, and may in particular be a PCEF or TDF.

In this context, a PCEF is in charge of enforcing the PCC rules decided by a policy and charging rules function (PCRF). The PCEF may in addition perform the above-described determining procedure, enforcing procedure, etc.

A PCRF is a policy decision element which, notably based on the user profile and on the network conditions, decides which rule has to be enforced in the user plane. In a General Packet Radio Service (GPRS) network, for example, the PCRF may be capable of communicating with the Gateway GPRS Support Node (GGSN) to transfer authorization information, so as to be able to control internet protocol (IP) bearer resources. The IP bearer enables the user plane transport of IP packets and is capable of carrying many IP flows. The PCRF, which may be made aware by the PCEF of information regarding characteristics of end user devices used, behind an end user communication terminal, by a particular subscriber, may change the rules to be enforced by the PCEF depending on the information regarding the end user devices used by the subscriber (i.e. depending on the determined characteristics of the end user devices). This provides a more flexible policy framework.

The TDF capabilities may include those defined in 3GPP TS 23.203 V11.0.1 (2011-01) (already referred to above), i.e. representing the ability to perform application traffic detection, notification and policy control for detected application traffic. A network node implementing a TDF is a particularly appropriate network node on which the determining procedure may be carried out, whereas a network node implementing a PCEF is a particularly appropriate network node on which the enforcing procedure may be carried out.

The invention also relates to network nodes, sets of network nodes and computer programs as defined in the claims.

**[Brief description of the drawings]**

Embodiments of the present invention shall now be described, in conjunction with the appended figures, in which:

Fig. 1 schematically illustrates a network node in one embodiment of the invention, wherein the network node is located in a communication network and an end user communication terminal acts, for a subscriber, as entry point to the communication network;

Fig. 2 schematically illustrates a network node in one embodiment of the invention, wherein the network node is located in a communication network, and an end user communication terminal acts, for a subscriber, as entry point to the communication network for at least one end user device;

Fig. 3 schematically illustrates two network nodes in one embodiment of the invention, wherein the two network nodes are in a communication network, and an end user communication terminal acts, for a subscriber, as entry point to the communication network for at least one end user device;

Fig. 4 is a flowchart of a method in one embodiment of the invention;

Fig. 5 is a flowchart of a method in one embodiment of the invention, wherein, compared to Fig. 4, an additional step of receiving packets is explicitly illustrated;

Fig. 6 is a flowchart of a method in one embodiment of the invention, including both a determining procedure and an enforcing procedure;

Fig. 7 is a flowchart of a method in one embodiment of the invention, showing more detail on the determining procedure and the enforcing procedure;

Fig. 8 is a flowchart of a method in one embodiment of the invention, including a determining procedure and an enforcing procedure, wherein the enforcing procedure includes enforcing policy rules depending on an estimated number of distinct end user devices;

Fig. 9 is a flowchart of a method in one embodiment of the invention, including a recording procedure in addition to the determining procedure;

Fig. 10 schematically illustrates a network node in one embodiment of the invention, notably including a determining unit;

Fig. 11 schematically illustrates an exemplary structure of a network node that may be used in some embodiments of the invention;

Fig. 12 schematically illustrates a network node in one embodiment of the invention, notably including an enforcing unit in addition to a determining unit;

Fig. 13 schematically illustrates a set of network nodes including two network nodes in one embodiment of the invention, wherein the determining unit is included on a first of the two network nodes and the enforcing unit is included on a second of the two network nodes;

Fig. 14 schematically illustrates a network node in one embodiment of the invention, including a recording unit in addition to a determining unit;

Fig. 15 schematically illustrates end users, devices, terminals and a communication network to understand the context in which embodiments of the invention may be implemented;

Fig. 16 logically illustrates the relation between IP-CAN, IP flows and services which may characterize packets received in embodiments of the invention;

Fig. 17 logically illustrates the relation between IP-CAN, IP flows, services and devices that may characterize packets received in embodiments of the invention; and

Fig. 18 schematically illustrates a method in one embodiment of the invention, wherein the QoS associated with a service is changed upon detection of an end user device type.

**[Detailed description]**

The present invention shall now be described in conjunction with specific embodiments. These specific embodiments serve to provide the skilled person with a better understanding, but are not intended to in any way restrict the scope of the invention, which is defined by the appended claims.

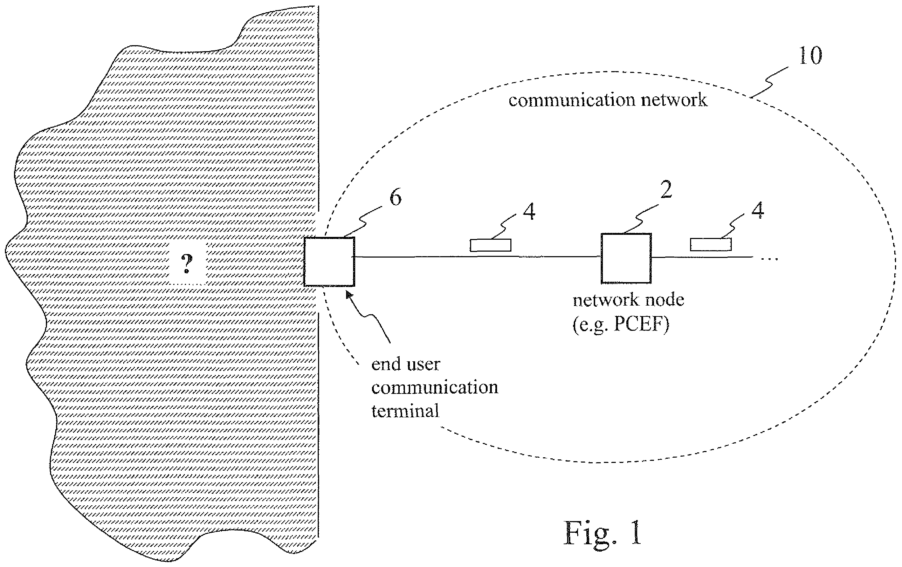

Fig. 1 schematically illustrates a communication network 10 including a network node 2, such as a PCEF. Although only one network node 2 is illustrated in communication network 10, communication network 10 may typically include many network nodes. Communication network 10 may be a packet core network, wherein packets 4 are routed and switched between network nodes. Packets 4 may transport data, so that communication network 10 may be a data communication network 10. A packet may for example be an Internet Protocol (IP) packet or another type of packet. A packet is transferred in the user plane. Communication network 10 may be connected to other networks (not illustrated). Communication network 10 may be for instance a 2G, 3G or 4G mobile communication network. Communication network 10 may be a telecommunication network comprising an Evolved Packet System (EPS) and incorporating features of a policy and charging control (PCC) architecture. For a discussion of such an exemplary architecture, see for instance: J.-J. Pastor Balbás et al, "Policy and Charging Control in the Evolved Packet System", IEEE Communications Magazine, February 2009, pp. 68-74.

At the edge of communication network 10, an end user communication terminal 6 is provided. End user communication terminal 6 acts, for a particular subscriber, as a point of entry or access to communication network 10. There may be as many end user communication terminals 6 as subscribers registered in communication network 10, although only one end user communication terminal 6 is illustrated for the sake of clarity in Fig. 1. End user communication terminal 6 may for instance be an Asymmetric Digital Subscriber Line (ADSL) router (with or without WiFi capabilities) or a 3G dongle, such as a network adapter or Universal Serial Bus (USB) adapter enabling the subscriber to connect one or more end user devices to communication network 10. End user communication terminal 6 may also be a mobile phone capable of connecting for instance through GERAN (standing for GSM EDGE Radio Access Network, i.e. Global System for Mobile Communications (GSM) Enhanced Data rates for GSM Evolution (EDGE) Radio Access Network), UTRAN (standing for Universal Terrestrial Radio Access Network), E-UTRAN (standing for evolved UMTS Terrestrial Radio Access Network), Wi-Fi, and/or Bluetooth protocols to communication network 10. End user communication terminal 6 may have several communication interfaces.

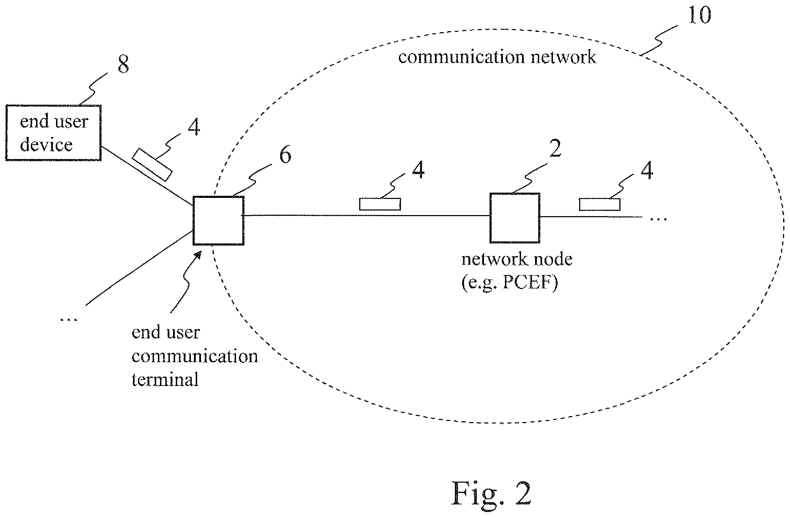

On the left-hand side of Fig. 1, a grey area with, in the middle thereof, a question mark schematically illustrates that, for network node 2, and for any network nodes in communication network 10, the environment located behind end user communication terminal 6 is normally unknown. The grey area of Fig. 1 thus also illustrates the problems identified and addressed by some of the embodiments of the invention, namely how to gain knowledge, from communication network 10, to information about the environment behind the end user communication terminal 6. Fig. 2 schematically illustrates the same elements as those illustrated in Fig. 1, except that the actual technical configuration behind end user communication terminal 6 is depicted. Namely, one or more end user devices 8 are connected, through end user communication terminal 6, to communication network 10. Although one end user device 8 is illustrated in Fig. 2, the ellipsis "..." on the left-hand side of Fig. 2 illustrates that more than one end user devices may be connected through end user communication terminal 6 to the communication network 10. Packets 4 form packet flows originating or terminating at an end user device 8. The end user device 8 therefore acts as one end point of the packet flows. Packet flows are unidirectional. In one embodiment, a packet flow is a set of packets 4 having the same IP-5 tuples, i.e.: as characterized by an origination IP address and transport protocol port, a destination IP address and transport protocol port, and a protocol above IP protocol (i.e. the protocol above the Layer 3 protocol, such as TCP or UDP protocol, wherein TCP stands for Transmission Control Protocol and UDP stands for User Datagram Protocol). Accordingly, packets having the same IP-5 tuple contents may be determined to belong to the same packet flow.

End user device 8 may for instance be a television, a laptop, a media player (such as a MP3 player), a smartphone, a game console, etc. In other words, end user devices 8 may be of different types. End user devices 8, each being of a particular type, may generate multiple packet flows, in relation to which it is advantageous to enforce specific policies in communication network 10 depending on the type of end user device.

Network node 2 carries out a determining procedure s24, including determining, from received packets 4, at least one characteristic of the environment behind end user communication terminal 6. In particular, determining procedure s24 includes determining, from received packets 4, at least one characteristic of end user device(s) 8 connected, through end user communication terminal 6 (which is controlled by a particular subscriber), to communication network 10. Network node 2 does so by at least inspecting received packets 4 beyond their physical and data link headers (i.e., more generally, beyond layer 2 control information). Network node 2 may for instance be configured to recognize some patterns in layer 4 or 5 headers or control information to classify the packets and the corresponding packet flows depending on the type of end user device 8 at which the packet flows originate or terminate. Network node 2 may then enforce policy rules depending on the type of the end user device 8 with which a packet flow is associated. Network node 2 may also record information about the estimated number of types of end-user devices 8 located behind end user communication terminal 6.

Network node 2 performing determining procedure s24 may be the one receiving packet 4. Alternatively, a node receiving a packet may transmit a copy of received packet 4 to network node 2 in charge of performing determining procedure s24.

End user communication terminal 6 connectable to communication network 10 is thus capable of providing connectivity to a plurality of end user devices 8, such as television sets, personal computers, media players, etc. End user devices 8 may then access data services through communication network 10 via data connections established through end user communication terminal 6. However, only end user communication terminal 6 is identified by communication network 10. Accordingly, policies that could, without the invention, be enforced by communication network 10 (e.g. via a PCC architecture) on data flows originating and/or terminating in a particular end user device 8, and with regard to end user communication terminal 6 and its related subscription, are limited to the end user communication terminal identifier(s) provided by the end user communication terminal 6 (e.g. at registration) and to the related subscription data. Consequently, communication network 10 could not, without the invention, apply dynamically policies, such as QoS policies, that best adapt to a registered end user communication terminal 6 at a given point in time. This is because end user communication terminal 6 may, at some point in time, only access data services for its own consumption and, later, may provide data connectivity towards communication network 10 to one or more end user devices 8 connected to end user communication terminal 6.

Network node 2 performs DPI on packets 4 belonging to the one data flow of a data connection established for an end user communication terminal 6 (e.g. from transport protocol headers, such as TCP message headers, or from application protocol headers such as HTTP message headers, etc, wherein TCP stands for Transmission Control Protocol and HTTP stands for Hypertext Transfer Protocol, see RFC 2616), so that, for each data flow, network node 2 determines the type of end user device 8 which originates or terminates the data flow. Then, network node 2 determines, based on the determined device type, a QoS rule or parameter for controlling a QoS characteristic of the data flow. Finally, network node 2 may apply, i.e. enforce, the determined QoS parameter to the data flow of the data connection.

This process may be carried out by network nodes 2 implementing 3GPP PCC functionalities. In this case, the DPI and detection process may be performed by a standalone TDF node, or by a network node having co-located PCEF and TDF functionalities. The end user device type information is then transferred from the TDF node, or from the PCEF/TDF node, to the PCRF (not illustrated) controlling the corresponding IP-CAN session (wherein IP-CAN stands for IP Connectivity Access Network). The PCRF then determines one or more QoS rules or parameters to be applied to the corresponding data flow. The QoS rules or parameters are transferred to network node 2 implementing a PCEF (or the network node implementing PCEF and TDF functions) for enforcement.

The characteristics of end user devices 8, and, more specifically, their sensitivity and/or requirements as far as QoS is concerned, can vary considerably. Network node 2 takes these characteristics into account in order to control QoS (decisions and enforcement) for the packet data flows. By doing so, network node 2 can enforce appropriate QoS to packet data flows without requiring end user intervention, without requiring changes in access protocols, and without requiring complex network configuration with regard to end user device identifiers and types.

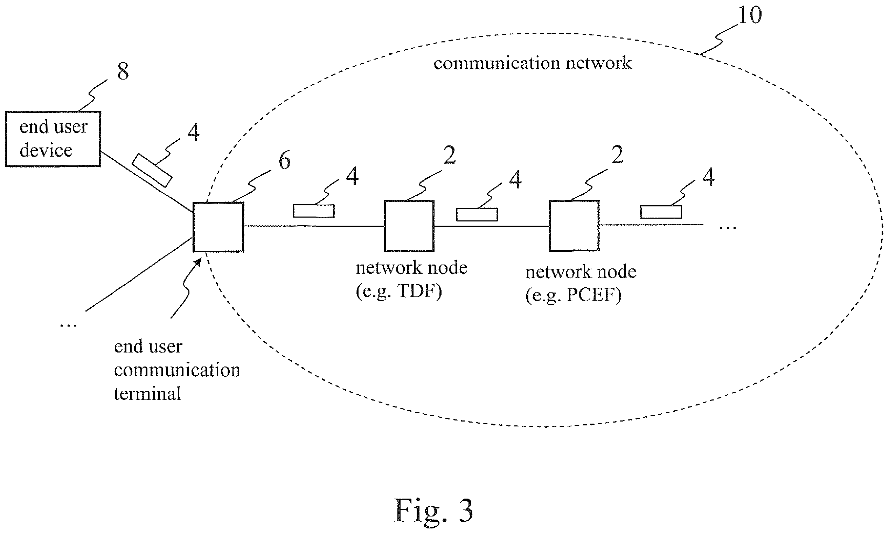

Fig. 3 schematically illustrates a communication network 10, like the one illustrated in Fig. 2 except that two network nodes 2 are illustrated. The skilled person will readily understand that other arrangements concerning the illustrated nodes in the figure (TDF, PCEF) are also possible in the routing path, which may comprise e.g. the PCEF being located in the uplink routing path before the TDF (i.e. closest to the end user communication terminal 6).

A first network node 2, such as for instance a node implementing a TDF, may be in charge of determining whether a received packet 4 belongs to a packet flow originating or terminating in an end user device 8 of a particular type. The determining operation is performed by deep inspecting the received packet 4 at the first network node 2. Then, information representing the result of the determination may be provided to a second network node 2, such as a node implementing a PCEF, in charge of enforcing policy rules depending on the result of determination. In other words, determining (as part of determining procedure s24) and enforcing (as part of enforcing procedure s26) may be performed on one network node 2 (as illustrated on Fig. 2) or, alternatively, more than one network node 2 (as illustrated on Fig. 3).

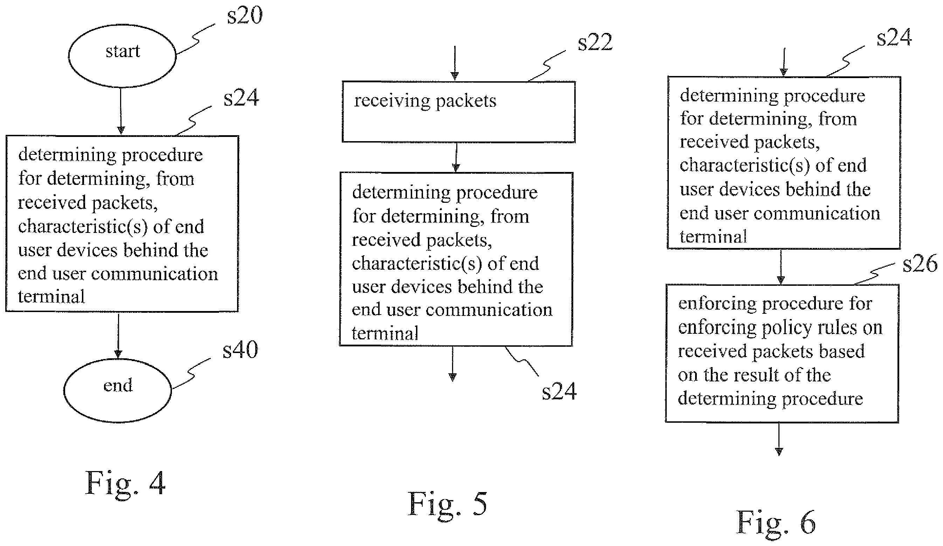

Fig. 4 is a flowchart of a method in one embodiment of the invention. The method is carried out by a network node 2. After starting s20, a determining procedure s24 is carried out. Determining procedure s24 includes determining, from received packets 4, characteristics of end user devices 8 located behind an end user communication terminal 6. Determining procedure s24 includes performing DPI on received packets 4. The result of determining procedure s24 may be used for determining policy rules to be enforced and for enforcing these policy rules, by a network node 2, on received packets 4 and on the packet flows to which they belong, depending on the result of determining procedure s24. Furthermore, the result of determining procedure s24 may be used for determining and enforcing policy rules, by a network node 2, with respect to part or all of the packets 4 of packet flows pertaining to the same IP-CAN session established by the end user communication terminal 6 for which the characteristic/s of the one or more end user devices 8 which lie behind the end user communication terminal 6 is/are detected. The result of determining procedure s24 may also be recorded for any purposes. After determining procedure s24, the method may end s40.

Fig. 5 schematically illustrates steps of a method in one embodiment of the invention. After receiving s22 packets, a determining procedure s24 is carried out. Determining procedure s24 has been described with reference to Fig. 4.

Fig. 6 is a flowchart of a method in one embodiment of the invention. In addition to the determining procedure s24 described with reference to Fig. 4, the method illustrated in Fig. 6 includes, after determining procedure s24, an enforcing procedure s26, carried out by a network node 2. Enforcing procedure s26 includes enforcing policy rules, such as QoS rules, on received packets 4 depending on the result of determining procedure s24. Enforcing policy rules, on received packets 4, depending on the result of the determining procedure s24 may include modifying, adapting, or more generally controlling, existing policy rules depending on the result of determining procedure s24, i.e. depending on the determined, detected or estimated characteristics of the end user device 8. DPI is performed to determine the type of the end user device 8 (determining procedure s24), which in turn determines the policy rules to be applied to, i.e. enforced on, a packet flow (enforcing procedure s26).

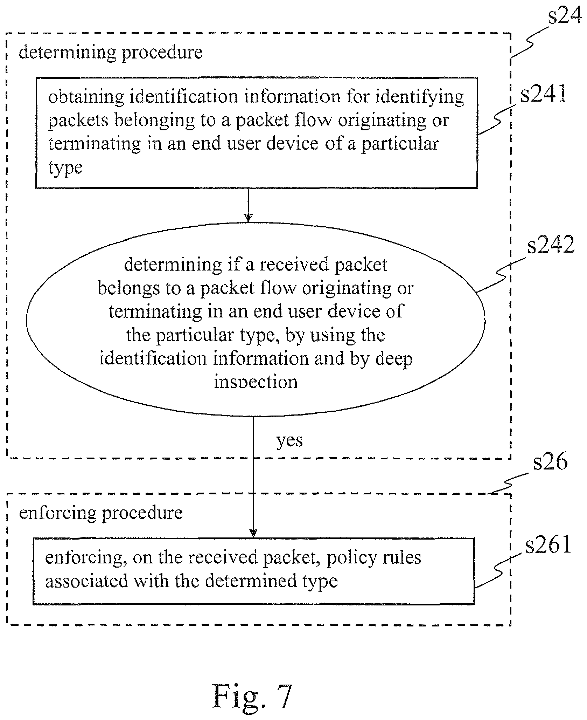

Fig. 7 is a flowchart of a method in one embodiment of the invention, in which the determined characteristics of end user devices 8 are their type. The determined type may for instance be whether the end user device 8 is a television, a laptop, a media player (such as a MP3 player), a smartphone, a game console, etc., which operating system (OS) is used on the end user device 8, and/or any other types, to the extent that corresponding patterns can be detected by inspecting packets.

Determining procedure s24 includes, first, a step of obtaining s241 identification information for enabling network node 2 to identify, among received packets 4, those belonging to a packet flow originating or terminating in an end user device 8 of a particular type. Network node 2 may obtain or receive some strings of bits or characters (e.g.: default values for certain flags, initial values for sequence numbers, initial sets of supported protocol options, etc) and/or parsing rules to be able, upon receiving a packet 4, to process and classify it according to the identification information.

After the step of obtaining s241, network node 2 determines s242 if the received packet 4 belongs to a packet flow originating or terminating in an end user device 8 of the particular type, by using the obtained information (the information obtained in step s241) and by performing DPI on received packet 4. If it is determined that received packet 4 belongs to a packet flow originating or terminating in an end user device 8 of the particular type ("yes" after step s242), network node 2 performs an enforcing procedure s26.

Enforcing procedure s26 includes enforcing s261 policy rules on the received packet 4, where the policy rules depend on the determined type. To do so, network node 2 may for instance store a table (or a set of tables) including a list of types of end user devices 8, a parsing rule or other identification information corresponding to each type, and a corresponding policy rule to be enforced on the packets 4 depending on the type of the end user device 8 with which they are associated.

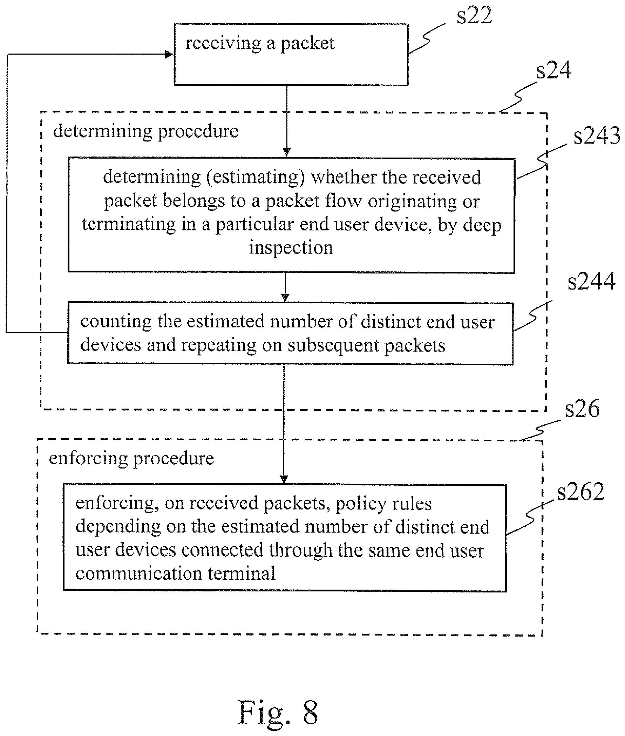

Fig. 8 is a flowchart of a method in one embodiment of the invention. Upon receiving s22 a packet 4, determining procedure s24 is carried out by network node 2. A first step s243 consisting in determining whether the received packet 4 belongs to a packet flow originating or terminating in a particular end user device 8 is carried out, by DPI of the packet 4. Determining step s243 may be carried out by determining the type of end user device 8 originating or terminating the packet flow to which the received packet belongs.

Network node 2 then counts s244 how many distinct end user devices 8 are identified. It may be assumed in that respect, although this may not always be correct (this is why the number of distinct end user devices 8 is said to be estimated), that the environment behind end user communication terminal 6 includes no more than one end user device 8 of the same particular type. In other words, network node 2 can detect that more than one end user device types are in use and can infer from that knowledge that, necessarily, more than one end user device 8 are in use if more than one end user device types are detected. However, if only one end user device type is detected, this does not mean that only one end user device 8 is in use, several end user devices of the same type could be sharing the connection. After step s244, the determining procedure s24 is carried on subsequent packets 4, as illustrated by the arrow from step s244 back to step s22.

An enforcing procedure s26 is also carried out by network node 2. Enforcing procedure s26 includes enforcing s262, on received packets 4, policy rules depending on the estimated number of distinct end user devices 8 connected, via the same end user communication terminal 6, to communication network 10.

In one sub-embodiment, the QoS of a PDP (user session, connection) may be limited once more than one end user device type is detected (more than one device type necessarily means more than one end user device 8). Operators may also want to provide advantageous QoS parameters to subscribers only using one end user device type (specifically the user equipment bundled with the subscription) and may want to discourage subscribers from sharing the connection between end user devices or just using an end user device type different from the one bundled with the subscription.

Similarly to QoS, other kinds of policy rules may be enforced for one or more of the data packet flows of an end user device 8 based on its detected characteristics. For example, a policy rule may comprise -in addition, or alternatively, to QoS rules-access control rules for some services (e.g. making a network node to drop packets from certain kind of end user devices 8), so that the access to some services is restricted for some kind of end user devices 8 and allowed for other kind of end user devices 8. Also, for example, a policy rule may, additionally or alternatively, comprise charging rules, so that the access to a service is charged with different criteria depending on the end user device 8 accessing to the service. In short: the policy rules that may be enforced by one or more network nodes 2 of a communications network 10, based on the determined characteristic/s of the one or more end user devices 8 that connect to the communications network through an end user communication terminal 6, may comprise -among other- rules governing QoS aspects, rules governing service access aspects, and/or rules governing charging aspects.

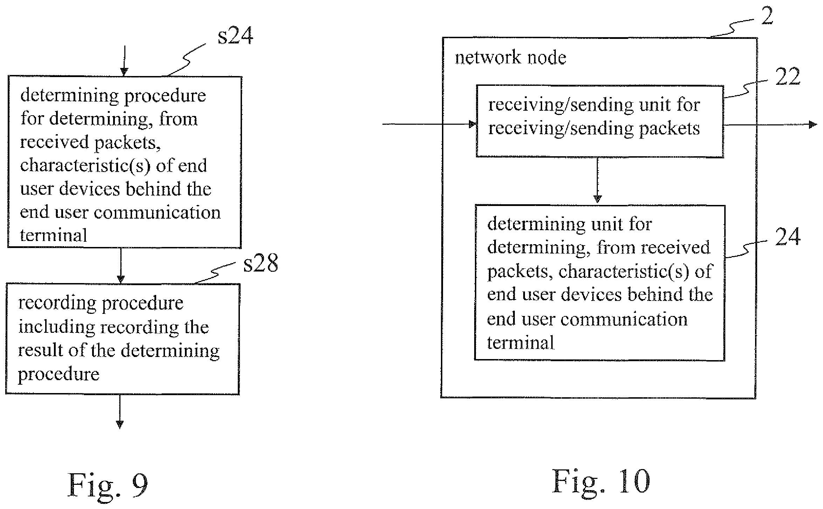

Fig. 9 is a flowchart of a method in one embodiment of the invention. After a determining procedure s24, described with reference to Fig. 4, a recording procedure s28 is carried out. Recording procedure s28 includes recording the result of determining procedure s24, for instance over a period of time, for any purpose, such as for diagnostic purposes, maintenance purposes, etc. The recorded information may for instance be used to propose to a subscriber operating an end user communication terminal 6 to upgrade its connection to communication network 10. This may enable the subscriber to select a technical connection to communication network 10 which is more adapted to the number of end user devices 8 using the end user communication terminal 6. Likewise, the recorded information may for instance be used by operators as follows: if a particular subscriber is sharing a subscription between multiple end user devices 8, that subscriber may be interested in acquiring more subscriptions (e.g., one subscription per end user device 8).

Fig. 10 schematically illustrates a network node 2 including a receiving/sending unit 22 and a determining unit 24. Receiving/sending unit 22 is configured for receiving and sending packets 4. Determining unit 24 is configured for determining, from received packets 4, at least one characteristic of one or more end user devices 8 connected, through an end user communication terminal 6, to communication network 10. Determining unit 24 is configured for performing the determining operation by DPI of the received packets 4. Receiving/sending unit 22 is optional. Network node 2 may include a determining unit 24 capable of being provided with copy of packets received by another network node 2. In other words, network node 2 may be specialized in performing DPI of packets but may not necessarily have any routing capabilities.

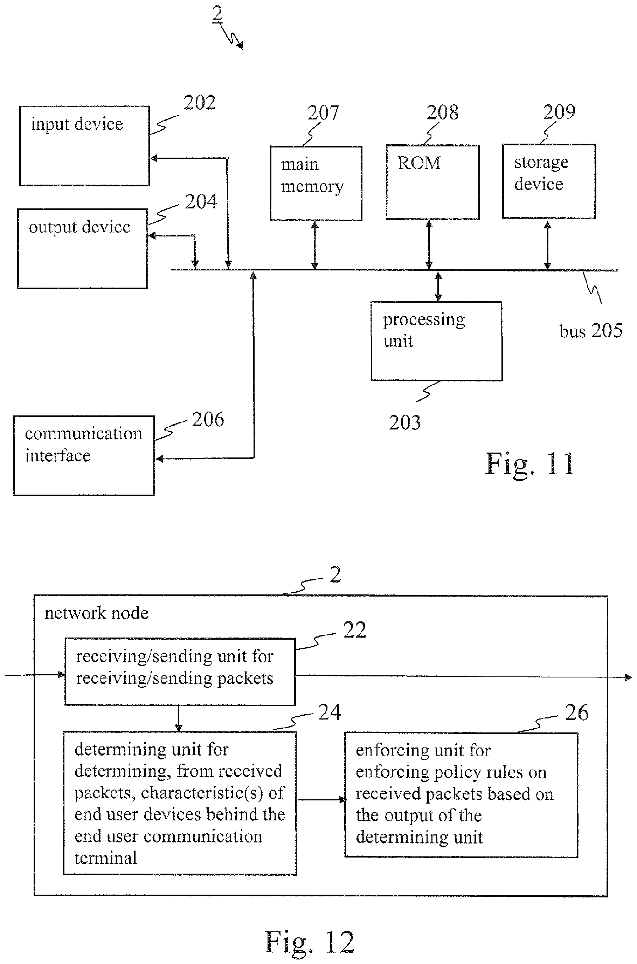

Fig. 11 is a schematic diagram of an exemplary implementation of a network node 2, which may for instance be a PCEF or TDF. As illustrated, network node 2 may include a bus 205, a processing unit 203, a main memory 207, a ROM 208, a storage device 209, an input device 202, an output device 204, and a communication interface 206. Bus 205 may include a path that permits communication among the components of network device 2.

Processing unit 203 may include a processor, a microprocessor, or processing logic that may interpret and execute instructions. Main memory 207 may include a RAM or another type of dynamic storage device that may store information and instructions for execution by processing unit 203. ROM 208 may include a ROM device or another type of static storage device that may store static information and instructions for use by processing unit 203. Storage device 209 may include a magnetic and/or optical recording medium and its corresponding drive.

Input device 202 may include a mechanism that permits an operator to input information to network device 2, such as a keyboard, a mouse, a pen, voice recognition and/or biometric mechanisms, etc. Output device 204 may include a mechanism that outputs information to the operator, including a display, a printer, a speaker, etc. Communication interface 206 may include any transceiver-like mechanism that enables network device 2 to communicate with other devices and/or systems. For example, communication interface 206 may include mechanisms for communicating with another device or system via a network, such as communication network 10.

Network device 2 may perform certain operations or processes described herein. Network device 2 may perform these operations in response to processing unit 203 executing software instructions contained in a computer-readable medium, such as main memory 207, ROM 208, and/or storage device 209. A computer-readable medium may be defined as a physical or a logical memory device. For example, a logical memory device may include memory space within a single physical memory device or distributed across multiple physical memory devices. Each of main memory 207, ROM 208 and storage device 209 may include computer-readable media. The magnetic and/or optical recording media (e.g.,

readable CDs or DVDs) of storage device 209 may also include computer-readable media. The software instructions may be read into main memory 207 from another computer-readable medium, such as storage device 209, or from another device via communication interface 206.

The software instructions contained in main memory 209 may cause processing unit 203 to perform operations or processes described herein. Alternatively, hardwired circuitry may be used in place of or in combination with software instructions to implement processes and/or operations described herein. Thus, implementations described herein are not limited to any specific combination of hardware and software.

Fig. 12 schematically illustrates a network node 2 in one embodiment of the invention. In addition to receiving/sending unit 22 and determining unit 24 described with reference to Fig. 10, network node 2 illustrated in Fig. 12 additionally includes an enforcing unit 26. Enforcing unit 26 is configured for enforcing policy rules, such as QoS rules, on received packets 4, depending on the result of the determining operation performed by determining unit 24. Although not illustrated in Fig. 12, enforcing unit 26 may be configured for controlling some packet queues, dropping some packets, rearranging the order of packets, etc. in order to enforce the policy rules.

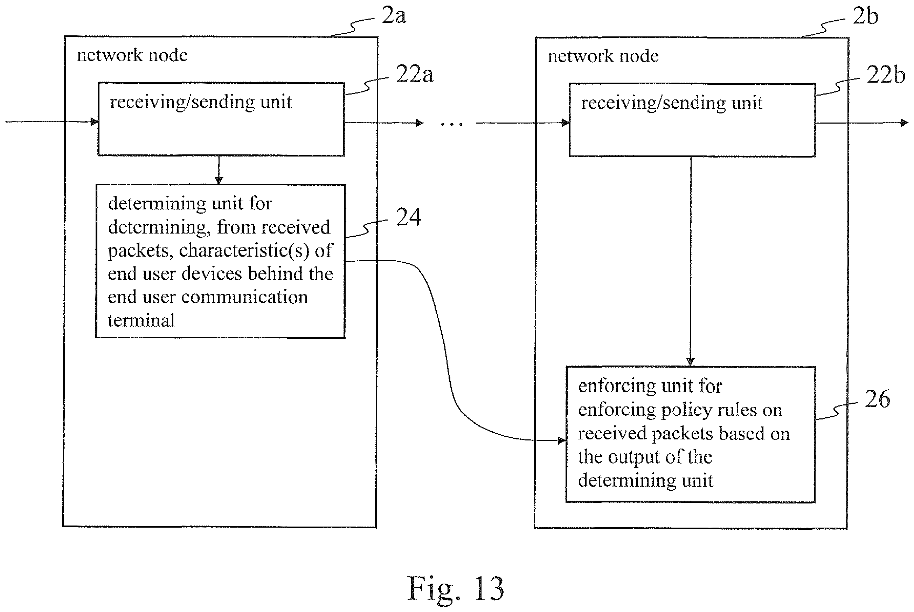

Fig. 13 schematically illustrates two network nodes 2, including a first network node 2a and a second network node 2b. First network node 2a includes a receiving/sending unit 22 and a determining unit 24. Second network node 2b includes a receiving/sending unit 22b and an enforcing unit 26. Determining unit 24 of first network node 2a provides the result of the determination to enforcing unit 26 of second network node 2b. The provision of information from determining unit 24 to enforcing unit 26 may be performed through a third network node, such as one implementing a PCRF in charge of deciding the policy rules to be enforced by network node 2b (such as a PCEF) depending on the result of the determination performed by the network node 2a (such as a TDF). First network node 2a may be a network node implementing a TDF and second network node 2b may be a network node implementing a PCEF.

As illustrated in Fig. 13, first network node 2a includes a determining unit 24. Determining unit 24 may be configured to perform DPI on received packets (to determine characteristic(s) of end user device(s)). As also illustrated in Fig. 13, second network node 2b includes an enforcing unit 26. Optionally, enforcing unit 26 may be configured to perform DPI to inspect data packets beyond the so-called IP-5 tuples, which comprise: IP origination address, IP destination address, origination transport port number, destination transport port number, and protocol identifier of the protocol above the layer 3 protocol IP -e.g. TCP, UDP. Whether to perform such further DPI on second network node 2b, i.e. in addition to the first DPI made by first network node 2a may depend on the kind of enforcement desired on the second network node 2b for the packets originating and/or terminating at an end user device 8 once the characteristics of the end user device 8 have been determined by the first DPI process.

In other words, if second network node 2b should carry out enforcement on a per end user device type only, such further DPI is not required on second network node 2b. This is because first network node 2a already provides information that relates a certain packet flow (such as for instance an IP flow identified by its corresponding IP-5 tuple) with a determined end user device type (i.e. as determined by the DPI process carried out by first network node 2a). One example is an enforcement policy that dictates a first QoS for IP flows originating/terminating in an "ipad", which differs from the QoS applicable to a "video-game console".

If however second network node 2b should carry out enforcement on a per end user device type and per service, such further DPI may be carried out by second network node 2b for service classification. One example is an enforcement policy that dictates that e.g. the service "Skype" is to be blocked for smartphones, but not for personal computers.

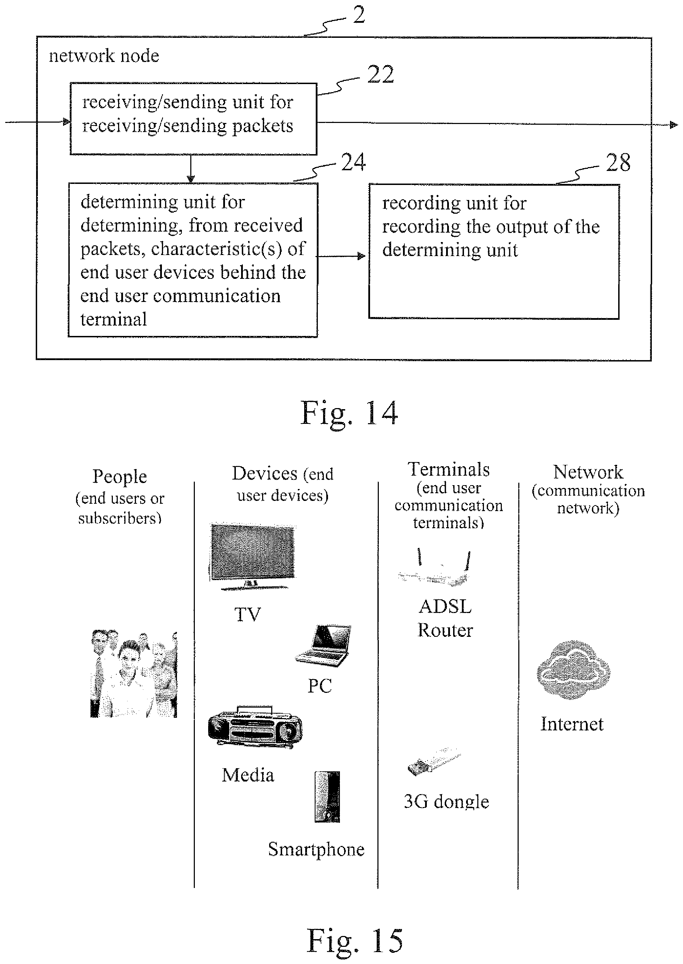

Fig. 14 schematically illustrates a network node 2 in one embodiment of the invention. In addition to receiving/sending unit 22 and determining unit 24, already described with reference to Fig. 10, network node 2 illustrated in Fig. 14 additionally includes a recording unit 28. Recording unit 28 is configured for recording the result of the determining operation carried out by determining unit 24. Recording unit 28 therefore enables network node 2 to record information about the environment behind end user communication terminal 6.

Embodiments of the invention, and their contexts, will now be further described, notably with reference to Figs. 15 to 18, after briefly coming back on the background and advantages of embodiments of the invention.

As mentioned above, communication network 10 may for instance be a packet core network. In one or more network nodes 2 of communication network 10, device detection techniques are applied. These techniques include detecting one or more characteristics of end user devices 8 located behind an end user communication terminal 6. The device detection techniques may notably be applied in order to modify or adapt policy rules, such as the QoS experienced by a subscriber who uses communication network 10.

The availability of cheap electronics and embedded operating systems has made it possible to develop a wide range of terminals, referred to here as end user communication terminals 6, that can connect to a data communication network 10, such as the Internet, and relay that connection to other devices, referred to here as end user devices 8, that are ultimately used by end users to access services available through data communication network 10.

The end user communication terminals 6 that connect to the Internet may use a wide range of access networks (fixed, mobile) and technologies (3G, LTE, DSL... etc) to relay the connection to the end user devices 8. The mechanisms to implement the relay function are various and may be either wired (such as USB, etc.) or wireless (such as Wi-Fi, Bluetooth, etc.). End user communication terminals 6 may forward the traffic by doing network level routing (layer 3 (L3) routing) or perform some sort of masquerading (NAT, Network Address Translation). NAT may be used for forwarding traffic but other techniques and methods may be used by an end user communication terminal 6, not necessarily sharing a single IP address for all end user devices 8 (each end user device 8 may have its unique, globally addressable IP address). Examples of end user communication terminals 6 include 3G USB dongles, mobile Wi-Fi hotspots such as MiFi devices or mobile phones with internet connectivity that can act as Wi-Fi hotspot, and DSL routers.

End users use end user devices 8, and not necessarily the end user communication terminals 6, to access the services provided through communication network 10 (in case of the Internet for instance, to surf the Web). Examples of end user devices 8 are tablet, laptop and desktop computers, television sets and videogame systems.

One end user communication terminal 6 may relay a connection for a subscriber's single end user device 8, but several end user devices 8 (operated by one or more users) may share a single connection provided by end user communication terminal 6 (single IP-CAN, but multiple end users devices 6 and end users).

End user communication terminal 6 (and not end user device 8 or the end user) owns the connection, holds the identity and is registered in the access network (which may be a part of communication network 10). In 3GPP networks for instance, this means that end user communication terminal 6 is the "subscriber" and that end user communication terminal 6 has an IMEI, IMSI, MSIDN... etc. These concepts are illustrated in Fig. 15.

Different end user devices 8 generate different usage patterns in communication network 10 and it has been recognized by the inventor that, in this context, the different end user devices 8 may require different qualities of service (QoS). It is expected from a tablet (i.e. a tablet computer) to generate low volumes of traffic but require high responsiveness, low latency and minimum packet loss. A television set streaming high definition video generates high volumes of traffic but may not be impacted by higher packet loss or high latency.

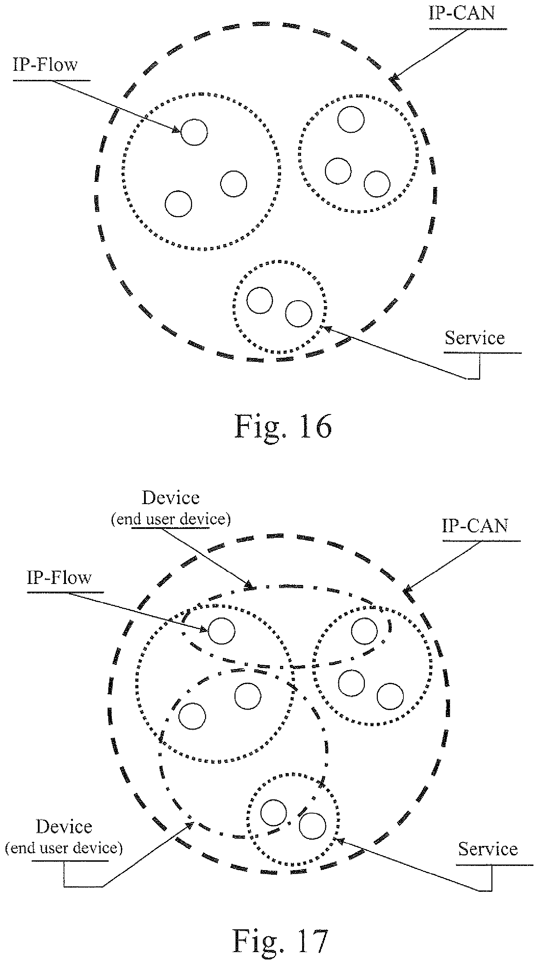

As illustrated in Fig. 16, technologies may allow IP-Flow identification (as defined by an IP-5 tuple) within an IP-CAN session and service detection within an IP-CAN session. Examples of services include generic browsing traffic (using HTTP, HTTPS or WSP, where WSP stands for Wireless Session Protocol), peer-to-peer protocols, VoIP traffic or popular websites and services (Google, Facebook or Twitter). Out of the IP-Flows in a session, each flow may be identified and classified according to a service, or not classified (which is equivalent to classify it to a default service).

Existing technologies may allow QoS to be set by the network based on the service detected:

$$QoS = f\,(service)$$

where 'f' is the function used to calculate the QoS parameters depending on the detected service.

However, there are problems with these solutions. Providing customized QoS parameters to different end user devices may be addressed by approximating the problem to a different problem with a known solution. Two techniques are so far known:

- The first technique involves using the identity of the terminal in the access network to guess the device in use. In 3GPP networks, this may be achieved by querying the IMEI (which is manufacturer-based) of the device but other methods may also be possible. This is in essence incorrect since the end user communication terminal 6 and the end user device 8 may be different pieces of equipment and there may be more than one end user device 8 per end user communication terminal 6, as explained above.

- The second technique involves applying QoS parameters based only on the service. This is generally not a good approximation because it is not addressing the core problem of QoS per end user device 8: it simply assumes that certain end user devices 8 use certain services. Unknown or very recent services escape this solution and services available in more than one type of end user device 8 cannot be treated individually for each end user device 8. Besides, not all end user devices 8 require the same QoS requirements for the same service.

Therefore, in one embodiment of the invention, a DPI analysis is performed on the data contents of the IP-Flows forwarded (i.e. relayed) by the end user communication terminal 6 (each of the IP-Flows being generated by the end user device 8 or end user devices 8 connected to end user communication terminal 6) and to determine, based on said inspection, the type or class of the end user device 8 sending the IP-Flows.

This may be achieved by inspecting protocol information elements present in the contents of the packets 4 belonging to an IP-Flow involving an end user device 8 used by a subscriber. Such protocol information elements include the fields present in TCP headers or the so-called "headers" in protocols such as HTTP.

In the exemplary case of HTTP, the content of the "User-Agent" header may be used to identify the type of end user device 8 involved in the HTTP transaction. Other headers like "UA-CPU" may also be used when available.

TCP headers may also be used to detect the type of end user device 8 in use. This may be achieved by tracking initial conditions in the TCP connection setup including, among others, the default set of options (EOL, NOP, SACKOK, MAXSEG, WSCALE) and the initial values of the following fields: maximum segment size (MSS), window scaling (WSC) and TCP timestamp (TS).

In one embodiment, after the type or class of end user device 8 is detected for a particular data stream, the nodal elements of a policy and charging control (PCC) architecture, such as a 3GPP PCC architecture, are used to enforce the differentiated QoS. Enforcing differentiated QoS may be also applied using other network architectures.

In one embodiment using a PCC architecture, the end user device type extracted and information regarding the description of the IP-Flows (IP-5 tuples with source and destination IP addresses, ports and protocol type) may be communicated via a "Gx" interface to a PCRF (although other interfaces like Rx can also be used). The PCRF then stores (or orders other node to store) the information. The PCRF, being the Policy Decision Point (PDP), may subsequently take policy decisions by asking the PCEF to perform actions on the said IP-Flow (like upgrade or downgrade the transmission rate), on the complete bearer (IP-CAN session), per service or even per end user device class, based only on information about this IP-Flows or based on the information received for the IP-Flows of a given subscription.

In one embodiment, DPI techniques are used to identify the end user device or the end user device class generating the traffic on the IP-CAN session (user-session). That information is then exported to the PDP to make policy decisions on the IP-CAN session, the IP-Flows within the session, the services or the traffic pertaining to a given end user device or end user device class. Depending on this information, policy decisions that affect QoS for the traffic may be enforced, but other policy decisions, such as access control related decisions (allow or deny traffic for a given IP-CAN session, IP-Flow, service or end user device class, etc) may also be enforced.

As illustrated in Fig. 17, according to one embodiment of the invention, a new use of traffic inspection is therefore created by introducing the concept of end user device 8 (or end user device class).

Examples of services include Voice over IP (VoIP), P2P or web browsing, and examples of end user devices 8 include personal computers (PC), video game systems, smartphones, multimedia players, etc, as already mentioned above.

An IP-Flow within an IP-CAN belongs to a service and to an end user device 8 (or end user device class). Out of the IP-Flows in a service, each IP-Flow belongs to a different device. Out of the IP-Flows in an end user device 8, each IP-Flow belongs to a different service. One IP-Flow can only belong to one IP-CAN session, one service and one end user device 8.

With the new use introduced in this embodiment, the QoS for the traffic in an IP-CAN may be a function of the service, the end user device 8 or a combination of both, as follows:

$$QoS = f \ (service)$$

$$QoS = g \ (end \ user \ device)$$

$$QoS = h \ (service, \ end \ user \ device)$$

The functions 'f', 'g' and 'h' are not mutually exclusive.

Now, an exemplary embodiment will be disclosed with reference to a telecommunications system comprising a PCC architecture based on 3GPP specification TS 23.203 V11.0.1 (referred to above).

This exemplary embodiment is based on the following points (a), (b), and (c):

(a) DPI techniques are used to inspect, and analyze, IP packets and flows generated by an end user device beyond the data heading contents of these packets corresponding to the network (L3) and transport (L4) levels of the packet. Namely, this includes inspecting and analyzing beyond the content of the so called IP-5 tuples of an IP packet, which comprise: source IP-port, source IP-address, destination IP-port, destination IP-address, and protocol over the IP protocol (e.g. TCP, UDP, etc).

Protocols that contain headers with a User-Agent string (e.g., HTTP) and TCP connection establishments may be analyzed.

The DPI functionality may be accomplished either: within a stand-alone network node 2 allocated within the data packets path which performs such a function (e.g. a "Traffic Detection Function", TDF), or collocated within a network node 2 routing the packets 4 (e.g. a PDN-GW/GGSN node implementing PCEF functionality and TDF functionality). In the aforementioned 3GPP specification TS 23.203, the TDF may act as a functional entity performing some kind of DPI (i.e. inspect beyond IP-5 tuples) so as to detect, among other, the used application protocol in a data communication of an end user device 8. Therefore, the TDF may be advantageously modified to further detect and notify information elements within IP packets that convey information to identify the end user device type.

(b) After detecting the end user device type, the TDF or PCEF informs a policy function (e.g., a PCRF) over an enhanced Gx interface (Rx interface could also be used) of the end user device type and class and the IP-5 tuple of the flow generated by the end user device 8.

The PCRF stores the values (or asks another node to store the values) of the detected end user device type and the flow for its own consumption at a later time and to use it as input for subsequent policy decisions.

(c) The PCRF may trigger a QoS change decision to be implemented by the PCEF. This policy change decision may be applied to:

- IP-Flow pertaining to the end user device class reported (flow level QoS change).

- IP-Flows for other end user device classes or services (flow level QoS change).

- Services (service level QoS change).

- IP-CAN (bearer level QoS change).

and combinations thereof.

In this exemplary embodiment, the TDF (such as reference 2a in Fig. 13) may implement an end user device class detection table to map between DPI patterns and end user device classes. Similarly, the PCRF (such as reference 2b in Fig. 13) requires an end user device's class QoS table to map end user device classes and QoS profiles.

The end user device class detection table may contain three columns:

- DPI pattern: description of the inspection mechanism used to identify the end user device class (i.e., identification information for enabling the network node 2 to identify a packet associated with a particular end user class).

- End user device class description: a textual description of the end user device detected by the DPI pattern.

- End user device class: an Unsigned32 identifying the end user device class.

An example of this table is as follows:

Table 1. End user device class detection table

| DPI pattern | End user device class description | End user device class |
|---|---|---|
| HTTP User-Agent header contains "Windows" | Personal computer | 1 |
| HTTP User-Agent header contains "Windows" and HTTP UA-CPU header is "ARM" | Smartphone | 2 |
| HTTP User-Agent header contains "Android" | Smartphone | 2 |
| HTTP User-Agent header contains "iOs" | Smartphone | 2 |
| Window Size (WSS) in TCP SYN is 16384 | Tablet computer | 3 |
| Window Size (WSS) in TCP SYN is 65535 | Tablet computer | 3 |
| Overall packet size of TCP SYN is 64 bytes | Videogame system | 4 |

The PCRF implements the end user device class QoS table with the following information:
• End user device class: an Unsigned32 identifying the end user device class.
• QoS profile: an Unsigned32 identifying the QoS parameters (contained in a preconfigured profile) to be applied to the IP-Flows, service, end user device class or IP-CAN session.

Table 2. End user device class QoS table

| End user device class | QoS profile |
| --- | --- |
| 1 | 1001 |
| 2 | 1002 |
| 3 | 1003 |
| 4 | 1004 |

The parameters configured in the PCRF for each QoS profile may include (although are not restricted to): maximum bit rate (MBR), jitter, delay, etc.

In one embodiment, a mechanism is provided so that the TDF may inform the PCRF of the end user device detection. It is, however, to be noted that the relationship between end user device classes and the corresponding applicable policy rules (e.g. comprising a QoS profile as illustrated by Table 2 above) may alternatively be configured within the PCEF. Alternatively, the PCRF may instruct the PCEF to enforce e.g. profile "1001" for a certain flow, or flows -i.e. determined according to the end user device characteristic/s received from the TDF- wherein the PCEF is arranged to map profile "1001" into the corresponding QoS parameters (e.g.: MBR, delay, jitter, etc) to be enforced therein for the corresponding data flow/s.

For the situations in which Gx is the interface in use between the TDF and the PCRF, a new Device-Class-Description AVP may be used (wherein AVP stands for attribute-value pair).

The Device-Class-Description AVP (AVP code to be allocated) may be of type Grouped, and it may contain the filter to describe the IP-Flow (Flow-Description AVP) and the end user device class type in the Device-Class AVP.

Information on the Flow-Description AVP may be found in 3GPP TS 29.214 and contains the IP-5 tuple defining the IP-Flow.

The Device-Class AVP (AVP code to be allocated) is of type Unsigned32, and it contains the end user device class identifier. The meaning of the end user device class identifier has to be agreed beforehand between the TDF and the PCRF.

The syntax may be:

```
Device-Class-Description ::= < AVP Header code>
    0*1 [Flow-Description]
            [Device-Class]
       * [AVP]
```

For the PCRF to inform the PCEF of the policies to be enforced on the traffic, PCC rules may be installed or removed or proprietary extensions may be used for access control and QoS management.

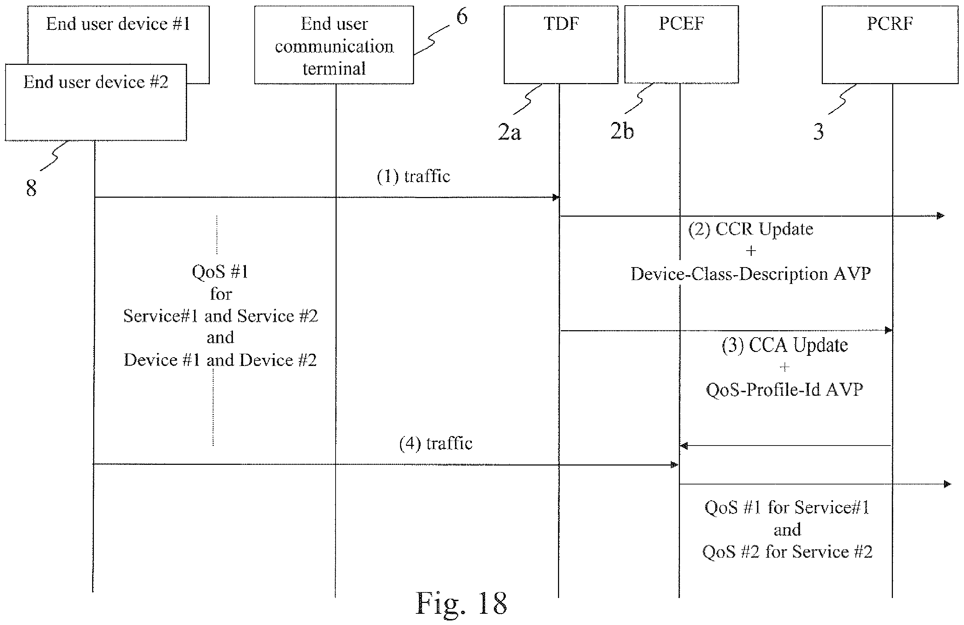

Fig. 18 depicts the signalling involved in this exemplary embodiment. In other words, Fig. 18 illustrates an example of service QoS change based on end user device detection. It depicts the case of service QoS change after end user device detection.

In illustrated step (1) (labelled "traffic"), traffic arrives to the TDF 2a coming from several end users using different end user devices 8, all within the same IP-CAN session and split in several IP-Flows belonging to different services.

The TDF 2a inspects all traffic generated by the end users and, for each end user device 8 detected (with the configuration provided in the end user device class detection table), forwards the flow information and the end user device type to the PCRF 3 using the above-referred Device-Class-Description AVP (illustrated step 2, labelled "CCR Update + Device-Class-Description AVP", wherein CCR stands for Credit Control Request, in Diameter). The PCRF 3, acting as PDP and using the configuration in the end user device class QoS table, assigns a QoS per IP-Flow, IP-CAN, service or end user device class.

Illustrated step (3) (labelled "(3) CCA Update + QoS-Profile-Id AVP") depicts the case of new QoS per service, in which the PCRF 3 downloads to the PCEF 2b a new QoS profile using the QoS-Profile-AVP in Gx (changing QoS per IP-Flow, IP-CAN or device class is also possible but not depicted in this example).

After the PCEF 2b enforces the new QoS in illustrated step (4) (labelled "traffic"), different QoS are applied per service (last step labelled "QoS #1 for Service#1 and QoS #2 for Service #2").

For cases in which it is necessary to individually change the QoS of an IP-Flow or an end user device class, a mechanism involving a new QoS-Profile-Description AVP is now presented. It is understood that other methods are available to change the QoS profile per IP-CAN or service. However, the described mechanism may be applied to change the QoS profile of an IP-CAN or a service.

If the interface between the PCRF and the PCEF is the Gx interface, the QoS-Profile-Description AVP (AVP code to be allocated) may be used to change the QoS-Profile of an IP-Flow, IP-CAN, service or end user device class. It may be of type Grouped, and it may contain one or zero of the following AVPs:

- The filter to describe the IP-Flow in a Flow-Description AVP.
- The end user device class in the Device-Class AVP.
- The service type in a Service-Id AVP.

If neither of these AVPs is found, it is assumed that the new QoS profile applies to the IP-CAN session.

The Device-Class AVP (AVP code to be allocated) and the Service-Id AVP (AVP code to be allocated) are of type Unsigned32, and contain the end user device class and service identifier respectively. The meaning of these integers has to be agreed beforehand between the TDF and the PCRF.

The syntax may be:

```
QoS-Profile-Description ::= < AVP Header code>
      0*1 [Flow-Description]
      0*1 [Device-Class]
      0*1 [Service-Id]
        * [AVP]
```

As mentioned above, embodiments of the invention add a new dimension to traffic inspection: traffic may be classified to pertaining to a service, a device or a service and an end user device 8.

Moreover, it allows network operators to have different connection characteristics (QoS) based on the end user device 8 in use, regardless of the end user communication terminal 6 used to access the communication network 10 or the services in use (changing the QoS having into account the end user device 8, the end user communication terminal 6 and the service is still possible though). This is especially important in the following scenarios:

- Some end user devices 8 consume more bandwidth resources than others. Operators could implement minimum bandwidth allocations based on end user device 8.
- Operators could limit the concurrent use of end user devices 8 per subscription. Identifying end user devices 8 opens the possibility to count them.
- The above embodiments of the invention are still compatible with service-based QoS: identifying the end user devices 8 in use gives an additional dimension to the knowledge an operator has over the traffic sent by subscribers.

In one embodiment of the invention, which can be combined with any one of the embodiments referred to in the present document, the end user communication terminal 6 may be an end user communication terminal 6 having no built-in proxy capabilities. In other words, such an end user communication terminal 6 does not modify the layer 4 to layer 7 control information of the packets transiting through it. Yet in other words, such an end user communication terminal 6 leaves intact, i.e. untouched, the layer 4 to layer 7 control information of the packets transiting through it. The layer numbers are here understood in the sense of the OSI reference model, as elsewhere in the present document, although these layer numbers may be translated into other reference models.

In one embodiment of the invention, which can be combined with any one of the embodiments referred to in the present document, the data of at least some of the layers of the received packets 4 that are inspected (in the determining procedure s24 or by the determining unit 24) are not encrypted. In a sub-embodiment, only layer 7 encryption is used and at least another layer is inspected.

The physical entities according to the invention, including the network nodes may comprise or store computer programs including instructions such that, when the computer programs are executed on the physical entities, steps and procedures according to embodiments of the invention are carried out. The invention also relates to such computer programs for carrying out methods according to the invention, and to any computer-readable medium storing the computer programs for carrying out methods according to the invention.

Where the terms "determining unit", "enforcing unit", "recording unit", etc. are used herewith, no restriction is made regarding how distributed these elements may be and regarding how gathered elements may be. That is, the constituent elements of a unit may be distributed in different software or hardware components or devices for bringing about the intended function. A plurality of distinct elements may also be gathered for providing the intended functionalities.

Any one of the above-referred units of a network node may be implemented in hardware, software, field-programmable gate array (FPGA), application-specific integrated circuit (ASICs), firmware or the like.

In further embodiments of the invention, any one of the above-mentioned and/or claimed determining unit, enforcing unit, recording unit, etc. is replaced by determining means, enforcing means, recording means, etc. respectively, or by a determiner, an enforcer, a recorder, etc. respectively, for performing the functions of the determining unit, enforcing unit, recording unit, etc.

In further embodiments of the invention, any one of the above-described procedures or steps may be implemented using computer-readable instructions, for example in the form of computer-understandable procedures, methods or the like, in any kind of computer languages, and/or in the form of embedded software on firmware, integrated circuits or the like.

Although the present invention has been described on the basis of detailed examples, the detailed examples only serve to provide the skilled person with a better understanding, and are not intended to limit the scope of the invention. The scope of the invention is defined by the appended claims.

**Claims**

1. Method carried out by at least one network node (2) in a communication network (10), the method including

   a determining procedure (s24) including determining, from received packets (4), at least one characteristic of one or more end user devices (8) connected, through an end user communication terminal (6), to the communication network (10), wherein the determining procedure (s24) includes inspecting at least one of

   layer n control information of the received packets (4), wherein n is an integer equal to or larger than 3; and the received packets' (4) payload encapsulated by layer 7 control information;
   wherein the layer level is understood in the sense of the Open Systems Interconnection reference model, here abbreviated as OSI reference model; and **characterized by**

   an enforcing procedure (s26) including enforcing policy rules, on received packets (4), depending on the result of the determining procedure (s24) .

2. Method of claim 1, wherein

   the policy rules comprise quality of service rules, here abbreviated as QoS rules, and
   the at least one characteristic of the one or more end user devices (8) includes whether an end user device (8) is of a particular type.

3. Method of claim 2, wherein the determining procedure (s24) includes:

   obtaining (s241) identification information for identifying packets (4) belonging to a packet flow originating or terminating in an end user device (8) of the particular type, the end user device (8) connecting, through the end user communication terminal (6), to the communication network (10); and
   determining (s242) whether a received packet (4) belongs to a packet flow originating or terminating in an end user device (8) of the particular type, by using the identification information and by inspecting at least one of layer n control information of the received packet (4) and the received packet's (4) payload encapsulated by layer 7 control information; and,

   the enforcing procedure (s26) includes:
   if it is determined that the received packet (4) belongs to a packet flow originating or terminating in an end user device (8) of the particular type, here referred to as determined type, enforcing (s261), on the received packet (4), policy rules associated with the determined type.

4. Method according to any one of the preceding claims, wherein the at least one characteristic of the one or more end user devices (8) includes an estimated number of end user devices (8) connected, through the end user communication terminal (6), to the communication network (10).

5. Method of claim 4, wherein the determining procedure (s24) includes:

   determining (s243) whether a received packet (4) belongs to a packet flow originating or terminating in a particular end user device (8) connected, through an end user communication terminal (6), to the communication network (10), by inspecting at least one of layer n control information of the received packet (4) and the received packet's (4) payload encapsulated by layer 7 control information; and

repeating (s244) the step of determining on subsequently received packets; and

the enforcing procedure (s26) includes:

enforcing (s262),
on received packets (4) belonging to a packet flow originating or terminating in an end user device (8) connected, through the end user communication terminal (6), to the communication network (10),
policy rules depending on the estimated number of end user devices (8) connected, through the same end user communication terminal (6), to the communication network (10).

6. Method according to any one of the preceding claims, further including

a recording procedure (s28) including recording the result of the determining procedure (s24), wherein the at least one characteristic of the one or more end user devices (8) includes at least one of:

(i) whether an end user device (8) is of a particular type; and
(ii) an estimated number of end user devices (8) connected, through the end user communication terminal (6), to the communication network (10).

7. Method according to any one of the preceding claims, wherein the at least one network node (2) includes at least one of a policy and charging enforcement function, here abbreviated as PCEF, and a traffic detection function, here abbreviated as TDF.

8. Network node (2) or set of network nodes (2), the network node (2) or set of network nodes (2) being adapted to receive packets (4) in a communication network (10), wherein the network node (2) or set of network nodes (2) include:

a unit (24), here referred to as determining unit (24), configured for determining, from received packets (4), at least one characteristic of one or more end user devices (8) connected, through an end user communication terminal (6), to the communication network (10), wherein determining includes inspecting at least one of

layer n control information of the received packets (4), wherein n is an integer equal to or larger than 3; and
the received packets' (4) payload encapsulated by layer 7 control information;
wherein the layer level is understood in the sense of the Open Systems Interconnection reference model, here abbreviated as OSI reference model; and **characterized by**

a unit (26), here referred to as enforcing unit (26), configured for enforcing policy rules, on received packets (4), depending on the result of the determining operation configured to be performed by the determining unit (24).

9. Network node (2) or set of network nodes (2) according to claim 8, wherein

the policy rules comprise quality of service rules, here abbreviated as QoS rules; and
the at least one characteristic of the one or more end user devices (8) includes whether an end user device (8) is of a particular type.

10. Network node (2) or set of network nodes (2) according to claim 9, wherein the determining unit (24) is configured for:

obtaining identification information for identifying packets (4) belonging to a packet flow originating or terminating in an end user device (8) of the particular type, the end user device (8) connecting, through the end user communication terminal (6), to the communication network (10);
determining whether a received packet (4) belongs to a packet flow originating or terminating in an end user device (8) of the particular type, by using the identification information and by inspecting at least one of layer n control information of the received packet (4) and the received packet's (4) payload encapsulated by layer 7 control information; and,

the enforcing unit (26) is configured for:
if it is determined that the received packet (4) belongs to a packet flow originating or terminating in an end user device (8) of the particular type, here referred to as determined type, enforcing, on the received packet (4), policy rules associated with the determined type.

**11.** Network node (2) or set of network nodes (2) according to any one of claims 8 to 10, wherein the at least one characteristic of the one or more end user devices (8) includes an estimated number of end user devices (8) connected, through the end user communication terminal (6), to the communication network (10).

**12.** Network node (2) or set of network nodes (2) according to claim 11, wherein the determining unit (24) is configured for:

determining whether a received packet (4) belongs to a packet flow originating or terminating in a particular end user device (8) connected, through an end user communication terminal (6), to the communication network (10), by inspecting at least one of layer n control information of the received packet (4) and the received packet's (4) payload encapsulated by layer 7 control information; and
repeating the step of determining on subsequently received packets (4); and

the enforcing unit (26) is configured for:

enforcing,
on received packets (4) belonging to a packet flow originating or terminating in an end user device (8) connected, through the end user communication terminal (6), to the communication network (10),
policy rules depending on the estimated number of end user devices (8) connected, through the same end user communication terminal (6), to the communication network (10).

**13.** Network node (2) or set of network nodes (2) according to any one of claims 8 to 12, further including

a recording unit (28) configured for recording the result of the determining operation carried out by the determining unit (24),
wherein the at least one characteristic of the one or more end user devices (8) includes at least one of:

(i) whether an end user device (8) is of a particular type; and
(ii) an estimated number of end user devices (8) connected, through the end user communication terminal (6), to the communication network (10).

**14.** Network node (2) or set of network nodes (2) according to any one of claims 8 to 13, including at least one of a policy and charging enforcement function, here abbreviated as PCEF, and a traffic detection function, here abbreviated as TDF.

**15.** Computer program including computer-understandable instructions configured, when executed on a network node (2) or set of network nodes (2), to cause to the network node (2) or set of network nodes (2) to carry out the method according to any one of claims 1 to 7.


**Patentansprüche**

**1.** Verfahren, das durch zumindest einen Netzwerkknoten (2) in einem Kommunikationsnetzwerk (10) ausgeführt wird, das Verfahren enthaltend
eine Bestimmungsprozedur (s24), enthaltend ein Bestimmen, aus empfangenen Paketen (4), zumindest einer Eigenschaft einer oder mehrerer Endbenutzervorrichtungen (8), die durch ein Endbenutzerkommunikationsendgerät (6) mit dem Kommunikationsnetzwerk (10) verbunden sind, wobei die Bestimmungsprozedur (s24) ein Überprüfen zumindest eines von
Schicht n-Steuerinformationen der empfangenen Pakete (4), wobei n eine ganze Zahl gleich oder größer 3 ist; und
der Nutzlast der empfangenen Pakete (4), die durch Schicht 7-Steuerinformationen eingekapselt ist;
wobei die Schichtebene im Sinn des Open Systems Interconnection-Referenzmodells, hier als OSI-Referenzmodell abgekürzt, zu verstehen ist, enthält; und
**gekennzeichnet durch**
eine Durchsetzungsprozedur (s26), die Durchsetzungsrichtlinienregeln enthält, an empfangenen Paketen (4), abhängig vom Ergebnis der Bestimmungsprozedur (s24).

**2.** Verfahren nach Anspruch 1, wobei
die Richtlinienregeln Dienstgüteregeln enthalten, hier als QoS-Regeln abgekürzt, und
die zumindest eine Eigenschaft der einen oder mehreren Endbenutzervorrichtungen (8) enthält, ob eine Endbenutzervorrichtung (8) von einem besonderen Typ ist.

3. Verfahren nach Anspruch 2, wobei die Bestimmungsprozedur (s24) enthält:

Erhalten (s241) von Identifizierungsinformationen zum Identifizieren von Paketen (4), die zu einem Paketstrom gehören, der in einer Endbenutzervorrichtung (8) des besonderen Typs anfängt oder endet, wobei die Endbenutzervorrichtung (8) durch das Endbenutzerkommunikationsendgerät (6) mit dem Kommunikationsnetzwerk (10) verbunden ist; und

Bestimmen (S242), ob ein empfangenes Paket (4) zu einem Paketstrom gehört, der in einer Endbenutzervorrichtung (8) des besonderen Typs anfängt oder endet, unter Verwendung der Identifizierungsinformationen und durch Überprüfen zumindest eines von Schicht n-Steuerinformationen des empfangenen Pakets (4) und der Nutzlast des empfangenen Pakets (4), die durch Schicht 7-Steuerinformationen eingekapselt ist; und

die Durchsetzungsprozedur (s26) enthält:

wenn bestimmt wird, dass das empfangene Paket (4) zu einem Paketstrom gehört, der in einer Endbenutzervorrichtung (8) des besonderen Typs anfängt oder endet, hier als bestimmter Typ bezeichnet, Durchsetzen (S261) von Richtlinienregeln, die mit dem bestimmten Typ verknüpft sind, an dem empfangenen Paket (4).

4. Verfahren nach einem der vorangehenden Ansprüche, wobei die zumindest eine Eigenschaft der einen oder mehreren Endbenutzervorrichtungen (8) eine geschätzte Anzahl von Endbenutzervorrichtungen (8) enthält, die durch das Endbenutzerkommunikationsendgerät (6) mit dem Kommunikationsnetzwerk (10) verbunden sind.

5. Verfahren nach Anspruch 4, wobei die Bestimmungsprozedur (s24) enthält:

Bestimmen (s243), ob ein empfangenes Paket (4) zu einem Paketstrom gehört, der in einer besonderen Endbenutzervorrichtung (8) anfängt oder endet, die durch ein Endbenutzerkommunikationsendgerät (6) mit dem Kommunikationsnetzwerk (10) verbunden ist, durch Überprüfen zumindest eines von Schicht n-Steuerinformationen des empfangenen Pakets (4) und der Nutzlast des empfangenen Pakets (4), die durch Schicht 7-Steuerinformationen eingekapselt ist; und

Wiederholen (s244) des Bestimmungsschritts an anschließend empfangenen Paketen; und

die Durchsetzungsprozedur (s26) enthält:

Durchsetzen (S262) an empfangenen Paketen (4), die zu einem Paketstrom gehört, der in einer Endbenutzervorrichtung (8) anfängt oder endet, die durch das Endbenutzerkommunikationsendgerät (6) mit dem Kommunikationsnetzwerk (10) verbunden ist, von Richtlinienregeln, die von der geschätzten Anzahl von Endbenutzervorrichtungen (8) abhängen, die durch dasselbe Endbenutzerkommunikationsendgerät (6) mit dem Kommunikationsnetzwerk (10) verbunden sind.

6. Verfahren nach einem der vorangehenden Ansprüche, ferner enthaltend
eine Aufzeichnungsprozedur (s28), die ein Aufzeichnen des Ergebnisses der Bestimmungsprozedur (s24) enthält, wobei die zumindest eine Eigenschaft der einen oder mehreren Endbenutzervorrichtungen (8) zumindest eines enthält von:

(i) ob eine Endbenutzervorrichtung (8) von einem besonderen Typ ist; und
(ii) eine geschätzte Anzahl von Endbenutzervorrichtungen (8), die durch das Endbenutzerkommunikationsendgerät (6) mit dem Kommunikationsnetzwerk (10) verbunden sind.

7. Verfahren nach einem der vorangehenden Ansprüche, wobei der zumindest eine Netzwerkknoten (2) zumindest eine von einer Richtlinien- und Abrechnungsdurchsetzungsfunktion, hier als PCEF abgekürzt, und einer Verkehrsdetektionsfunktion, hier als TDF abgekürzt, enthält.

8. Netzwerkknoten (2) oder Satz von Netzwerkknoten (2), wobei der Netzwerkknoten (2) oder Satz von Netzwerkknoten (2) ausgebildet ist, Pakete (4) in einem Kommunikationsnetzwerk (10) zu empfangen, wobei der Netzwerkknoten (2) oder Satz von Netzwerkknoten (2) enthält:

eine Einheit (24), hier als Bestimmungseinheit (24) bezeichnet, die konfiguriert ist, aus empfangenen Paketen (4) zumindest eine Eigenschaft der einen oder mehreren Endbenutzervorrichtungen (8) zu bestimmen, die durch ein Endbenutzerkommunikationsendgerät (6) mit dem Kommunikationsnetzwerk (10) verbunden sind, wobei ein Bestimmen ein Überprüfen zumindest eines von Schicht n-Steuerinformationen der empfangenen Pakete (4), wobei n eine ganze Zahl gleich oder größer 3 ist;

und
der Nutzlast der empfangenen Pakete (4), die durch Schicht 7-Steuerinformationen eingekapselt ist;
wobei die Schichtebene im Sinn des Open Systems Interconnection-Referenzmodells, hier als OSI-Referenzmodell abgekürzt, zu verstehen ist, enthält; und
**gekennzeichnet durch**
eine Einheit (26), hier als Durchsetzungseinheit (26) bezeichnet, die konfiguriert ist zum Durchsetzen von Richtlinienregeln, an empfangenen Paketen (4), abhängig vom Ergebnis der Bestimmungsoperation, die konfiguriert ist, durch die Bestimmungseinheit (24) durchgeführt zu werden.

9.  Netzwerkknoten (2) oder Satz von Netzwerkknoten (2) nach Anspruch 8, wobei
die Richtlinienregeln Dienstgüteregeln enthalten, hier als QoS-Regeln abgekürzt, und
die zumindest eine Eigenschaft der einen oder mehreren Endbenutzervorrichtungen (8) enthält, ob eine Endbenutzervorrichtung (8) von einem besonderen Typ ist.

10. Netzwerkknoten (2) oder Satz von Netzwerkknoten (2) nach Anspruch 9, wobei die Bestimmungseinheit (24) konfiguriert ist zum:

Erhalten von Identifizierungsinformationen zum Identifizieren von Paketen (4), die zu einem Paketstrom gehören, der in einer Endbenutzervorrichtung (8) des besonderen Typs anfängt oder endet, wobei die Endbenutzervorrichtung (8) durch das Endbenutzerkommunikationsendgerät (6) mit dem Kommunikationsnetzwerk (10) verbunden ist; und
Bestimmen, ob ein empfangenes Paket (4) zu einem Paketstrom gehört, der in einer Endbenutzervorrichtung (8) des besonderen Typs anfängt oder endet, unter Verwendung der Identifizierungsinformationen und durch Überprüfen zumindest eines von Schicht n-Steuerinformationen des empfangenen Pakets (4) und der Nutzlast des empfangenen Pakets (4), die durch Schicht 7-Steuerinformationen eingekapselt ist; und
die Durchsetzungseinheit (26) konfiguriert ist zum:
wenn bestimmt wird, dass das empfangene Paket (4) zu einem Paketstrom gehört, der in einer Endbenutzervorrichtung (8) des besonderen Typs anfängt oder endet, hier als bestimmter Typ bezeichnet, Durchsetzen von Richtlinienregeln, die mit dem bestimmten Typ verknüpft sind, an dem empfangenen Paket (4).

11. Netzwerkknoten (2) oder Satz von Netzwerkknoten (2) nach einem der Ansprüche 8 bis 19, wobei die zumindest eine Eigenschaft der einen oder mehreren Endbenutzervorrichtungen (8) eine geschätzte Anzahl von Endbenutzervorrichtungen (8) enthält, die durch das Endbenutzerkommunikationsendgerät (6) mit dem Kommunikationsnetzwerk (10) verbunden sind.

12. Netzwerkknoten (2) oder Satz von Netzwerkknoten (2) nach Anspruch 11, wobei die Bestimmungseinheit (24) konfiguriert ist zum:

Bestimmen, ob ein empfangenes Paket (4) zu einem Paketstrom gehört, der in einer besonderen Endbenutzervorrichtung (8) anfängt oder endet, die durch ein Endbenutzerkommunikationsendgerät (6) mit dem Kommunikationsnetzwerk (10) verbunden ist, durch Überprüfen zumindest eines von Schicht n-Steuerinformationen des empfangenen Pakets (4) und der Nutzlast des empfangenen Pakets (4), die durch Schicht 7-Steuerinformationen eingekapselt ist; und
Wiederholen des Bestimmungsschritts an anschließend empfangenen Paketen (4); und
die Durchsetzungseinheit (26) konfiguriert ist zum:
Durchsetzen an empfangenen Paketen (4), die zu einem Paketstrom gehört, der in einer Endbenutzervorrichtung (8) anfängt oder endet, die durch das Endbenutzerkommunikationsendgerät (6) mit dem Kommunikationsnetzwerk (10) verbunden ist, von Richtlinienregeln, die von der geschätzten Anzahl von Endbenutzervorrichtungen (8) abhängen, die durch dasselbe Endbenutzerkommunikationsendgerät (6) mit dem Kommunikationsnetzwerk (10) verbunden sind.

13. Netzwerkknoten (2) oder Satz von Netzwerkknoten (2) nach einem der Ansprüche 8 bis 12, ferner enthaltend
eine Aufzeichnungseinheit (28), die konfiguriert ist zum Aufzeichnen des Ergebnisses der Bestimmungsoperation, die durch die Bestimmungseinheit (24) ausgeführt wird,
wobei die zumindest eine Eigenschaft der einen oder mehreren Endbenutzervorrichtungen (8) zumindest eines enthält von:

(i) ob eine Endbenutzervorrichtung (8) von einem besonderen Typ ist; und

(ii) eine geschätzte Anzahl von Endbenutzervorrichtungen (8), die durch das Endbenutzerkommunikationsendgerät (6) mit dem Kommunikationsnetzwerk (10) verbunden sind.

14. Netzwerkknoten (2) oder Satz von Netzwerkknoten (2) nach einem der Ansprüche 8 bis 13, enthaltend zumindest eine von einer Richtlinien- und Abrechnungsdurchsetzungsfunktion, hier als PCEF abgekürzt, und einer Verkehrsdetektionsfunktion, hier als TDF abgekürzt.

15. Rechnerprogramm, enthaltend rechnerverständliche Anweisungen, das konfiguriert ist, wenn es auf einem Netzwerkknoten (2) oder Satz von Netzwerkknoten (2) ausgeführt wird, den Netzwerkknoten (2) oder Satz von Netzwerkknoten (2) zu veranlassen, das Verfahren nach einem der Ansprüche 1 bis 7 auszuführen.

## Revendications

1. Procédé réalisé par au moins un noeud de réseau (2) dans un réseau de communication (10), le procédé comprenant une procédure de détermination (s24) comprenant la détermination, à partir de paquets reçus (4), d'au moins une caractéristique d'un ou de plusieurs dispositifs d'utilisateur final (8) connectés, par une borne de communication d'utilisateur final (6), au réseau de communication (10), dans lequel la procédure de détermination (s24) comprend l'inspection d'au moins une des informations de commande de la couche n des paquets reçus (4), n représentant un nombre entier supérieur ou égal à 3 ; et
la charge utile des paquets reçus (4) encapsulé par des informations de commande de la couche 7 ;
le niveau de couche étant compris dans le sens du modèle de référence d'interconnexion de systèmes ouverts, sous la forme abrégée de modèle de référence OSI dans le présent document ; et **caractérisé par**
une procédure d'application (s26) comprenant l'application de règles de politique, sur des paquets reçus (4), en fonction du résultat de la procédure de détermination (s24).

2. Procédé selon la revendication 1, dans lequel
les règles de politique comprennent la qualité de règles de service, sous la forme abrégée de règles QoS dans le présent document ; et
l'au moins une caractéristique de l'un ou de plusieurs dispositifs d'utilisateur final (8) comprend de savoir si oui ou non un dispositif d'utilisateur final (8) est d'un type particulier.

3. Procédé selon la revendication 2, dans lequel la procédure de détermination (s24) comprend :

l'obtention (s241) d'informations d'identification pour des paquets identifiants (4) appartenant à un flux de paquets originaire ou terminant dans un dispositif d'utilisateur final (8) du type particulier, le dispositif d'utilisateur final (8) se connectant, par la borne de communication d'utilisateur final (6), au réseau de communication (10) ; et
la détermination (s242) de savoir si oui ou non un paquet reçu (4) appartient à un flux de paquets originaire ou terminant dans un dispositif d'utilisateur final (8) du type particulier, par l'utilisation des informations d'identification et par l'inspection d'au moins une des informations de commande de la couche n du paquet reçu (4) et de la charge utile du paquet reçu (4) encapsulé par des informations de commande de la couche 7 ; et
l'unité d'application (s26) comprend :
s'il est déterminé que le paquet reçu (4) appartient à un flux de paquets originaire ou terminant dans un dispositif d'utilisateur final (8) du type particulier, communément appelé type déterminé dans le présent document, l'application (s261), sur le paquet reçu (4), de règles de politique associées au type déterminé

4. Procédé selon l'une quelconque des revendications précédentes, dans lequel l'au moins une caractéristique de l'un ou de plusieurs dispositifs d'utilisateur final (8) comprend un nombre estimé de dispositifs d'utilisateur final (8) connectés, par la borne de communication d'utilisateur final (6), au réseau de communication (10).

5. Procédé selon la revendication 4, dans lequel la procédure de détermination (s24) comprend :

la détermination (s243) de savoir si un paquet reçu (4) appartient à un flux de paquets originaire ou terminant dans un dispositif d'utilisateur final particulier (8) connecté, par une borne de communication d'utilisateur final (6), au réseau de communication (10), par l'inspection d'au moins une des informations de contrôle de la couche n du paquet reçu (4) et de la charge utile du paquet reçu (4) encapsulé par des informations de commande de la couche 7 ; et
la répétition de l'étape de détermination sur des paquets ultérieurement reçus (4) ; et

la procédure d'application (s26) comprend :
l'application (s262), sur des paquets reçus (4) appartenant à un flux de paquets originaire ou terminant dans un dispositif d'utilisateur final particulier (8) connecté, par une borne de communication d'utilisateur final (6), au réseau de communication (10), de règles de politique en fonction du nombre estimé de dispositifs d'utilisateur final (8) connectés, par une borne de communication d'utilisateur final (6), au réseau de communication (10) .

6. Procédé selon l'une quelconque des revendications précédentes, comprenant en outre
une procédure d'enregistrement (s28) comprenant le registre mon du résultat de la procédure de détermination (s24), dans lequel l'au moins une caractéristique de l'un ou de plusieurs dispositifs d'utilisateur final (8) comprend au moins un parmi :

(i) si oui ou non un dispositif d'utilisateur final (8) est d'un type particulier ; et
(ii) un nombre estimé de dispositifs d'utilisateur final (8) connectés, par la borne de communication d'utilisateur final (6), au réseau de communication (10).

7. Procédé selon l'une quelconque des revendications précédentes, dans lequel l'au moins un noeud de réseau (2) comprend au moins une parmi une fonction d'application de politique et de facturation, sous la forme abrégée de PCEF dans le présent document, et une fonction de détection de trafic, sous la forme abrégée de TDF dans le présent document.

8. Noeud de réseau (2) ou ensemble de noeuds de réseau (2), le noeud de réseau (2) ou l'ensemble de noeuds de réseau (2) étant adapté pour recevoir des paquets (4) dans un réseau de communication (10), dans lequel le noeud de réseau (2) ou l'ensemble de noeuds de réseau (2) comprend :

une unité (24), communément appelé unité de détermination (24) dans le présent document, conçue pour déterminer, à partir de paquets reçus (4), au moins une caractéristique d'un ou de plusieurs dispositifs d'utilisateur final (8) connectés, par une borne de communication d'utilisateur final (6), au réseau de communication (10), dans lequel la détermination inclut l'inspection d'au moins une parmi
des informations de commande de la couche n des paquets reçus (4), n représentant un nombre entier supérieur ou égal à 3 ; et
la charge utile des paquets reçus (4) encapsulés par des informations de commande de la couche 7 ;
le niveau de couche étant compris dans le sens du modèle de référence d'interconnexion de systèmes ouverts, sous la forme abrégée de modèle de référence OSI dans le présent document ; et **caractérisé par**
une unité (26), communément appelée unité d'application (26) dans le présent document, conçue pour l'application de règles de politique, sur des paquets reçus (4), en fonction du résultat de l'opération de détermination conçue pour être effectuée au moyen de l'unité de détermination (24).

9. Noeud de réseau (2) ou ensemble de noeuds de réseau (2) selon la revendication 8, dans lequel
les règles de politique comprennent la qualité de règles de service, sous la forme abrégée de règles QoS dans le présent document ; et
l'au moins une caractéristique de l'un ou de plusieurs dispositifs d'utilisateur final (8) comprend de savoir si oui ou non un dispositif d'utilisateur final (8) est d'un type particulier.

10. Noeud de réseau (2) ou ensemble de noeuds de réseau (2) selon la revendication 9, dans lequel l'unité de détermination (24) est conçue pour :

l'obtention d'informations d'identification pour des paquets identifiants (4) appartenant à un flux de paquets originaire ou terminant dans un dispositif d'utilisateur final (8) du type particulier, le dispositif d'utilisateur final (8) se connectant, par la borne de communication d'utilisateur final (6), au réseau de communication (10) ;
la détermination de savoir si oui ou non un paquet reçu (4) appartient à un flux de paquets originaire ou terminant dans un dispositif d'utilisateur final (8) du type particulier, par l'utilisation des informations d'identification et par l'inspection d'au moins une des informations de commande de la couche n du paquet reçu (4) et de la charge utile du paquet reçu (4) encapsulé par des informations de commande de la couche 7 ; et
l'unité d'application (26) est conçue pour :
s'il est déterminé que le paquet reçu (4) appartient à un flux de paquets originaire ou terminant dans un dispositif d'utilisateur final (8) du type particulier, communément appelé type déterminé dans le présent document, l'application, sur le paquet reçu (4), de règles de politique associées au type déterminé.

**11.** Noeud de réseau (2) ou ensemble de noeuds de réseau (2) selon l'une quelconque des revendications 8 à 10, dans lequel l'au moins une caractéristique de l'un ou de plusieurs dispositifs d'utilisateur final (8) comprend un nombre estimé de dispositifs d'utilisateur final (8) connectés, par la borne de communication d'utilisateur final (6), au réseau de communication (10) .

**12.** Noeud de réseau (2) ou ensemble de noeuds de réseau (2) selon la revendication 11, dans lequel l'unité de détermination (24) est conçue pour :

la détermination de savoir si oui ou non un paquet reçu (4) appartient à un flux de paquets originaire ou terminant dans un dispositif d'utilisateur final particulier (8) connecté, par une borne de communication d'utilisateur final (6), au réseau de communication (10), par l'inspection d'au moins une des informations de contrôle de la couche n du paquet reçu (4) et de la charge utile du paquet reçu (4) encapsulé par des informations de commande de la couche 7 ; et
la répétition de l'étape de détermination sur des paquets ultérieurement reçus (4) ; et
l'unité d'application (26) est conçue pour :
l'application, sur des paquets reçus (4) appartenant à un flux de paquets originaire ou terminant dans un dispositif d'utilisateur final particulier (8) connecté, par une borne de communication d'utilisateur final (6), au réseau de communication (10), de règles de politique en fonction du nombre estimé de dispositifs d'utilisateur final (8) connectés, par une borne de communication d'utilisateur final (6), au réseau de communication (10).

**13.** Noeud de réseau (2) ou ensemble de noeuds de réseau (2) selon l'une quelconque des revendications 8 à 12, comprenant en outre
une unité d'enregistrement (28) conçue pour l'enregistrement du résultat de l'opération de détermination effectuée au moyen de l'unité de détermination (24),
dans lequel l'au moins une caractéristique de l'un ou de plusieurs dispositifs d'utilisateur final (8) comprend au moins un parmi :

(iii) si oui ou non un dispositif d'utilisateur final (8) est d'un type particulier ; et
(iv) un nombre estimé de dispositifs d'utilisateur final (8) connectés, par la borne de communication d'utilisateur final (6), au réseau de communication (10).

**14.** Noeud de réseau (2) ou ensemble de noeuds de réseau (2) selon l'une quelconque des revendications 8 à 13, comprenant au moins une parmi une fonction d'application de politique et de facturation, sous la forme abrégée de PCEF dans le présent document, et une fonction de détection de trafic, sous la forme abrégée de TDF dans le présent document.

**15.** Programme informatique comprenant des instructions qui peuvent être comprises par un ordinateur, conçu lorsqu'il est exécuté sur un noeud de réseau (2) ou un ensemble de noeuds de réseau (2), pour amener le noeud de réseau (2) ou l'ensemble de nos de réseau (2) à effectuer le procédé selon l'une quelconque des revendications 1 à 7.

Fig. 1

EP 2 745 485 B1

Fig. 2

Fig. 3

s24

determining procedure for determining, from received packets, characteristic(s) of end user devices behind the end user communication terminal

s26

enforcing procedure for enforcing policy rules on received packets based on the result of the determining procedure

Fig. 6

s22

receiving packets

determining procedure for determining, from received packets, characteristic(s) of end user devices behind the end user communication terminal

s24

Fig. 5

s20

start

s24

determining procedure for determining, from received packets, characteristic(s) of end user devices behind the end user communication terminal

s40

end

Fig. 4

s24

**determining procedure**

obtaining identification information for identifying packets belonging to a packet flow originating or terminating in an end user device of a particular type

s241

determining if a received packet belongs to a packet flow originating or terminating in an end user device of the particular type, by using the identification information and by deep inspection

s242

yes

s26

**enforcing procedure**

enforcing, on the received packet, policy rules associated with the determined type

s261

Fig. 7

s22

receiving a packet

s24

determining procedure

s243

determining (estimating) whether the received packet belongs to a packet flow originating or terminating in a particular end user device, by deep inspection

s244

counting the estimated number of distinct end user devices and repeating on subsequent packets

s26

enforcing procedure

s262

enforcing, on received packets, policy rules depending on the estimated number of distinct end user devices connected through the same end user communication terminal

Fig. 8

EP 2 745 485 B1

s24

determining procedure for determining, from received packets, characteristic(s) of end user devices behind the end user communication terminal

s28

recording procedure including recording the result of the determining procedure

Fig. 9

2

network node

22

receiving/sending unit for receiving/sending packets

24

determining unit for determining, from received packets, characteristic(s) of end user devices behind the end user communication terminal

Fig. 10

2

| | input device | 202 |
| | | 204 |
| | output device | |

207 main memory

208 ROM

209 storage device

bus 205

processing unit

203

communication interface 206

## Fig. 11

2

### network node

receiving/sending unit for receiving/sending packets 22

determining unit for determining, from received packets, characteristic(s) of end user devices behind the end user communication terminal 24

enforcing unit for enforcing policy rules on received packets based on the output of the determining unit 26

## Fig. 12

EP 2 745 485 B1

Fig. 13

**Fig. 14**

**Fig. 15**

IP-CAN

IP-Flow

Service

## Fig. 16

Device
(end user device)

IP-CAN

IP-Flow

Device
(end user device)

Service

## Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Policy and charging control architecture. 3GPP TS 23.203 V11.0.1. Technical Specification Group Services and System Aspects, January 2011
- *Detecting Subscribers Using NAT Devices in Wireless Data Networks*

- *3GPP TS 23.203 V11.0.1,* January 2011
- **J.-J. PASTOR BALBÁS et al.** Policy and Charging Control in the Evolved Packet System. *IEEE Communications Magazine,* February 2009, 68-74